# EUROPÄISCHE PATENTSCHRIFT

(11) **EP 4 568 808 B1**
(45) Veröffentlichungstag und Bekanntmachung des Hinweises auf die Patenterteilung: **17.06.2026**
(21) Anmeldenummer: 23761470.6
(22) Anmeldetag: 21.08.2023
(51) Int. Cl.: C23C 4/02, C23C 4/04, C23C 4/06, C23C 4/10, C23C 4/12, B24B 19/00, B24B 19/02, B24B 39/04, B24B 27/00, B23P 9/02

(54) **VERFAHREN ZUM GLATTWALZEN VON WERKSTÜCKOBERFLÄCHEN**
METHOD FOR ROLLER BURNISHING WORKPIECE SURFACES
PROCÉDÉ DE GALETAGE DE PIÈCES À USINER

(30) Priorität: 29.09.2022 DE 102022125066
(43) Veröffentlichungstag der Anmeldung: 18.06.2025
(73) Patentinhaber: HEGENSCHEIDT-MFD GmbH, 41812 Erkelenz (DE)
(72) Erfinder: RUDI, Alexander, 52538 Gangelt (DE); APPELT, Sascha, 41812 Erkelenz (DE); TEICHMANN, Daniel, 52072 Aachen (DE)
(74) Vertreter: Cohausz & Florack
(86) Internationale Anmeldenummer: PCT/EP2023/072878
(87) Internationale Veröffentlichungsnummer: WO 2024/068135

(56) Entgegenhaltungen:
- EP-A1- 0 438 031
- WO-A1-2012/084612
- DE-A1- 102015 226 062
- TIAN ET AL: "Laser-assisted burnishing of metals", INTERNATIONAL JOURNAL OF MACHINE TOOL DESIGN AND RESEARCH, PERGAMON PRESS, OXFORD, GB, vol. 47, no. 1, 9 October 2006 (2006-10-09), pages 14 - 22, XP005878027, ISSN: 0020-7357, DOI: 10.1016/J.IJMACHTOOLS.2006.03.002

## Beschreibung

Die Erfindung betrifft ein Verfahren gemäß Anspruch 1. Ein Verfahren dieser Art ist aus WO 2012/084612 A1 bekannt. Dieses offenbart ein Verfahren zum Glattwalzen von Werkstückoberflächen, umfassend die folgenden Schritte:
a) Bereitstellen eines Werkstücks,
b) Bereitstellen eines ersten Glattwalzwerkzeugs,
   - wobei das erste Glattwalzwerkzeug eine erste Glattwalzoberfläche zum Glattwalzen von Werkstücken umfasst,
   - wobei das erste Glattwalzwerkzeug eine Seitenfläche umfasst,
   - wobei die Seitenfläche angrenzend an die erste Glattwalzoberfläche angeordnet ist und, c) Glattwalzen des Werkstücks mittels des ersten Glattwalzwerkzeugs,
   - wobei beim Glattwalzen des Werkstücks mittels des ersten Glattwalzwerkezugs die erste Glattwalzoberfläche die Werkstückoberfläche des Werkstücks kontaktiert und glattwalzt.

Für viele Anwendungsbeispiele im Maschinenbau ist es erforderlich, dass Werkstücke eine glatte Werkstückoberfläche, eine strukturierte Werkstückoberfläche und/oder eine verfestigte Werkstückoberfläche aufweisen. Strukturierte aber auch glatte Werkstückoberflächen bieten sich für das Aufbringen einer Beschichtung besonders an. Eine Verfestigung des Werkstücks kann zudem einer Rissbildung bei einer auf das Werkstück aufgebrachten Beschichtung vorbeugen. Strukturierte Werkstückoberflächen bieten sich zudem dafür an, flüssige Medien und/oder Partikel, beispielsweise Schmiermittel und Schmutzpartikel, aufzunehmen oder zu leiten. Dies kann zu einer Erhöhung der Lebensdauer der Werkstücke durch verminderten Verschleiß beitragen. Das aufgenommene Schmiermittel verbessert bei Reibkontakten des Werkstücks die Schmierung und vermindert somit den Verschleiß. Das Aufnehmen der Schmutzpartikel verhindert wiederum, dass die Schmutzpartikel in den Reibkontakt gelangen und dort zusätzlichen Verschleiß verursachen.

Der Erfindung liegt daher die Aufgabe zugrunde, ein Verfahren bereitzustellen, durch welches entsprechende Werkstückoberflächen hergestellt werden können.

Diese Aufgabe wird durch die Merkmale des Patentanspruchs 1 gelöst.

Ein erfindungsgemäßes Verfahren zum Glattwalzen von Werkstückoberflächen umfasst zunächst den Schritt a) Bereitstellen eines Werkstücks. Das Werkstück umfasst dabei vorzugsweise wenigstens eine Funktionsfläche, welche glattgewalzt werden soll. Es handelt sich dabei insbesondere um wenigstens eine wälzbelastete, gleitbelastete und/oder reibbelastete Funktionsfläche. Die Funktionsfläche kann dabei beispielsweise wenigstens abschnittsweise rund, polygonförmig, vieleckig, exzentrisch oder flach ausgestaltet sein. Bei dem Werkstück handelt es sich vorzugsweise um eine Welle, insbesondere eine Radsatzwelle für ein Drehgestell eines Schienenfahrzeugs oder eine Kurbelwelle für einen Verbrennungsmotor. Das Werkstück, vorzugsweise die Welle, kann dabei eine Lagerstelle oder auch mehrere Lagerstellen aufweisen. Bei der Lagerstelle bzw, den mehreren Lagerstellen handelt es sich um eine Funktionsfläche bzw. mehrere Funktionsflächen. Im Falle einer Kurbelwelle kann es sich bei der Lagerstelle beispielsweise um ein Pleuellager oder um einen Wellenzapfen handeln. Im Falle einer Radsatzwelle kann es sich bei der Lagerstelle um den Bereich der Radsatzwelle handeln, der für die Verbindung mit dem Achslager des Drehgestells vorgesehen ist. Die Lagerstelle ist vorteilhafterweise wenigstens abschnittsweise rund und/oder im Wesentlichen rotationssymmetrisch ausgestaltet. Das Werkstück kann zudem wenigstens zwei Funktionsflächen, insbesondere wenigstens zwei Lagerstellen, umfassen.

Das Verfahren umfasst zudem den Schritt b) Bereitstellen eines ersten Glattwalzwerkzeugs,
- wobei das erste Glattwalzwerkzeug eine erste Glattwalzoberfläche zum Glattwalzen von Werkstücken umfasst,
- wobei das erste Glattwalzwerkzeug eine Seitenfläche umfasst,
- wobei die Seitenfläche angrenzend an die erste Glattwalzoberfläche angeordnet ist, und
- wobei die Seitenfläche ein Strukturelement, vorzugsweise ein mittels Laserstrukturieren erzeugtes Strukturelement, umfasst.

Das erste Glattwalzwerkzeug, insbesondere die erste Glattwalzoberfläche, kann wenigstens abschnittsweise rund bzw. zylindrisch und/oder wenigstens abschnittsweise rotationssymmetrisch ausgestaltet sein. Hierdurch kann das Glattwalzen auf einfache Weise durchgeführt werden, da das erste Glattwalzwerkzeug, insbesondere die erste Glattwalzoberfläche, an dem glatt zu walzenden Werkstück besonders leicht abrollen kann und/oder das glatt zu walzenden Werkstück an dem ersten Glattwalzwerkzeug, insbesondere die erste Glattwalzoberfläche, besonders leicht abrollen kann.

Vorzugsweise ist das erste Glattwalzwerkzeug eine Glattwalzrolle. Es bietet sich zudem an, dass das erste Glattwalzwerkzeug, insbesondere die erste Glattwalzoberfläche, drehbar gelagert ist. Alternativ oder zusätzlich kann zudem das Werkstück drehbar gelagert sein. Das erste Glattwalzwerkzeug, vorzugsweise die erste Glattwalzoberfläche, kann beispielsweise aus Metall, insbesondere Stahl, aus Hartmetall oder aus Keramik hergestellt sein. Hierdurch lässt sich eine hohe Standzeit des ersten Glattwalzwerkzeugs erreichen. Es können jedoch auch andere Werkstoffe eingesetzt werden. Das erste Glattwalzwerkzeug, vorzugsweise die erste Glattwalzoberfläche, kann außerdem eine Härte aufweisen die wenigstens gleich hoch oder höher ist als die Härte des Werkstücks, insbesondere als die Härte der Werkstückoberfläche des Werkstücks.

Ferner umfasst das Verfahren den Schritt c) Glattwalzen des Werkstücks mittels des ersten Glattwalzwerkzeugs, wobei beim Glattwalzen des Werkstücks mittels des ersten Glattwalzwerkezugs die erste Glattwalzoberfläche die Werkstückoberfläche des Werkstücks kontaktiert und glattwalzt. Durch Glattwalzen kann die Werkstückoberfläche geglättet oder strukturiert werden und somit die tribologischen Eigenschaften des Werkstücks, insbesondere der Werkstückoberfläche, verändert werden. Ein Glätten der Werkstückoberfläche und somit insbesondere eine glatte Werkstückoberfläche wird beim Glattwalzen vorzugsweise durch eine glatte Glattwalzoberfläche erreicht. Ein Strukturieren der Werkstückoberfläche und somit insbesondere eine strukturierte Werkstückoberfläche wird beim Glattwalzen durch eine Glattwalzoberfläche umfassend wenigstens ein Strukturelement erreicht. Das Strukturelement ist vorzugsweise eine Erhebung und/oder Vertiefung. Das Strukturelement erzeugt beim Glattwalzen eine Vertiefung und/oder Erhebung in der Werkstückoberfläche und somit eine strukturierte Werkstückoberfläche. Unter einer strukturiert Oberfläche, insbesondere einer strukturierten Werkstückoberfläche, wird vorliegend eine Oberfläche verstanden, die Erhebungen und/oder Vertiefungen aufweist, die gezielt auf die entsprechende Oberfläche aufgebracht wurden. Das erste Glattwalzwerkzeug, insbesondere die erste Glattwalzoberfläche, ist vorteilhafterweise glatt ausgestaltet oder umfasst wenigstens ein Strukturelement. Beim Glattwalzen im Schritt c) rollt vorzugsweise die erste Glattwalzoberfläche an dem Werkstück, insbesondere der Werkstückoberfläche, ab und/oder das Werkstück, insbesondere die Werkstückoberfläche, rollt beim Glattwalzen im Schritt c) an der ersten Glattwalzoberfläche ab. Die glatt zu walzenden Stellen des Werkstücks sind dabei vorteilhafterweise wenigstens abschnittsweise rund und/oder im Wesentlichen rotationssymmetrisch ausgestaltet. Während des Schritts c) wird zudem vorzugsweise eine Funktionsfläche des Werkstücks, insbesondere eine Lagerstelle des Werkstücks, glattgewalzt. Beim Schritt c) kann zudem vorgesehen sein, dass beim Glattwalzen des Werkstücks mittels des ersten Glattwalzwerkezugs die erste Glattwalzoberfläche das Werkstück, insbesondere die Werkstückoberfläche, verfestigt, vorzugsweise kaltverfestigt.

Eine Ausgestaltung des Verfahrens umfasst den Schritt d) Beschichten der Werkstückoberfläche des Werkstücks. Gemäß der DIN 8580:2003-09 wird unter Beschichten das Fertigen durch Aufbringen einer fest haftenden Schicht aus formlosem Stoff auf ein Werkstück verstanden. Beim Beschichten im Schritt d) wird Material auf die Werkstückoberfläche des im Schritt a) bereitgestellten Werkstücks aufgebracht. Das auf das Werkstück aufgebrachte und auf dem Werkstück haftende Material bildet eine Beschichtung auf dem Werkstück, wobei die Beschichtung an den Bereichen des Werkstücks, auf denen die Beschichtung aufgebracht wurde und haftet, die Werkstückoberfläche bildet. Durch das Beschichten können die physikalischen, elektrischen und/oder chemischen Eigenschaften des Werkstücks, insbesondere angrenzend an die Werkstückoberfläche, verändert werden. Die Beschichtung bzw. das für das Beschichten verwendete Material ist vorzugsweise metallisch und/oder nichtmetallisch. Die Werkstückoberfläche des im Schritt a) bereitgestellten Werkstücks kann zudem im Schritt d) wenigstens abschnittsweise oder im Wesentlichen vollständig beschichtet werden. Das Beschichten kann dabei mittels eines chemischen, mechanischen, thermischen und/oder thermomechanischen Verfahren erfolgen.

Eine weitere Ausführungsform des Verfahrens zeichnet sich dadurch aus, das in Schritt d) das Beschichten der Werkstückoberfläche des Werkstücks durch thermisches Spritzen erfolgt. Beim thermischen Spritzen wird die zu beschichtende Werkstückoberfläche nur in geringem Maße thermisch belastet. Zudem kann durch das thermische Spritzen eine Beschichtung gezielt in ausgewählten Bereichen des Werkstücks erzeugt werden. Das thermische Spritzen ist in der DIN EN ISO 14917:2017-08 beschrieben. Beim thermischen Spritzen wird das für das Beschichten verwendete Material mittels einer Spritzpistole bis zum plastischen Zustand erhitzt, beschleunigt und als Spritzpartikel auf die zu beschichtende Werkstückoberfläche geschleudert. Beim Auftreffen des jeweiligen Spritzpartikels auf dem Werkstück wird der Spritzpartikel flachgedrückt und erstarrt durch Wärmeabgabe. Die Spritzpartikel haften dabei an der zu beschichtenden Werkstückoberfläche bzw. an den bereits aufgebrachten Spritzpartikeln.

Die Haftung der Haftpartner beim Beschichten, insbesondere beim thermischen Spritzen, basiert dabei im Wesentlichen auf der mechanischen Adhäsion sowie der spezifischen Adhäsion. Bei der mechanischen Adhäsion kommt es zu einer formschlüssigen Verklammerung zwischen Vertiefungen und/oder Erhebungen der jeweiligen Haftpartner. Um die Haftung mittels mechanischer Adhäsion zu verbessern, bietet es sich daher an, dass die Werkstückoberfläche, vorzugsweise zu Beginn des Schritts d), eine Vertiefung und/oder eine Erhebung aufweist. Die Werkstückoberfläche kann zudem zu Beginn des Schritts d) wenigstens zwei Vertiefungen und/oder wenigstens zwei Erhebungen aufweisen. Die Vertiefung und/oder Erhebung der Werkstückoberfläche bzw. die Vertiefungen und/oder Erhebungen der Werkstückoberfläche können dabei im Schritt c) durch das Glattwalzen mittels des ersten Glattwalzwerkzeugs erzeugt werden. Bei der spezifischen Adhäsion kommt es zu physikalischen Wechselwirkungen sowie chemische Reaktionen zwischen den jeweiligen Haftpartner. Die spezifische Adhäsion trägt insbesondere bei glatten Oberflächen zur Haftung der jeweiligen Haftpartner bei. Um die Haftung mittels spezifischen Adhäsion zu verbessern, bietet es sich daher an, dass die Werkstückoberfläche, vorzugsweise zu Beginn des Schritts d), im Wesentlichen glatt ist. Die glatte Werkstückoberfläche kann dabei im Schritt c) durch das Glattwalzen mittels des ersten Glattwalzwerkzeugs erzeugt werden.

Gemäß einer Ausgestaltung des Verfahrens ist vorgesehen, dass der Schritt c) wenigstens zeitweise vor dem Schritt d) erfolgt und/oder der Schritt c) wenigstens zeitweise nach dem Schritt d) erfolgt. Durch ein Glattwalzen vor dem Beschichten, insbesondere dem thermischen Spritzen, kann die Haftung der Beschichtung mittels mechanischer Adhäsion und/oder spezifischer Adhäsion verbessert werden. Durch ein Glattwalzen vor dem Beschichten, insbesondere dem thermischen Spritzen, kann zudem eine Rissbildung in der Beschichtung sowie gegebenenfalls das Abplatzen der Beschichtung von dem Werkstück vermindert oder gar verhindert werden. Rissbildungen in der Beschichtung sowie das Abplatzen der Beschichtung können durch den sogenannten "Eierschalen-Effekt" entstehen. Der "Eierschalen-Effekt" tritt auf, wenn die Beschichtung spröder bzw. weniger duktil ist als das Material des Werkstücks auf dem die Beschichtung aufgebracht wurde. Das Material des Werkstücks, auf dem die Beschichtung aufgebracht wurde, wird auch als Substrat bezeichnet. Wirken Kräfte auf die Beschichtung und das Substrat, die die Streckgrenze des Substrats übertreffen, so kann das Substrat die aufgebrachten Kräfte durch plastische Verformung im Wesentlichen abbauen. Die sprödere bzw. härtere Beschichtung besitzt jedoch ein geringeres plastisches Verformungsvermögen. Bei einem zu starken Fließen des Substrats kann die Beschichtung der Verformung des Substrats nicht folgen und es kommt zur Rissbildung in der Beschichtung sowie gegebenenfalls dem Abplatzen der Beschichtung. Entsprechende Kräfte auf die Beschichtung und das Substrat können beispielsweise bei einem Abkühlen einer aufgebrachten Beschichtung auftreten. Durch das Abkühlen entstehen dann in der Beschichtung Zugspannungen, die zu dem "Eierschalen-Effekt" führen können. Durch das Glattwalzen vor dem Beschichten kann das Werkstück bzw. das Substrat, insbesondere angrenzend an die Werkstückoberfläche, kaltverfestigt werden. Hierdurch wird der Unterschied der Sprödigkeit bzw. Duktilität zwischen der Beschichtung und dem Werkstück bzw. dem Substrat vermindert und somit das Auftreten des "Eierschalen-Effekts" vermindert oder gar verhindert. Durch ein Glattwalzen nach dem Beschichten, insbesondere dem thermischen Spritzen, kann zudem das Werkstück, insbesondere die in Schritt d) erzeugte Beschichtung, verfestigt, vorzugsweise kaltverfestigt, werden und somit eine Festigkeitssteigerung des Werkstücks erreicht werden. Hierfür ist es vorteilhaft, wenn das erste Glattwalzwerkzeug, vorzugsweise die erste Glattwalzoberfläche, eine höhere Härte aufweist als die Werkstückoberfläche, insbesondere als die in Schritt d) aufgebrachte Beschichtung.

Wenn der Schritt c) wenigstens zeitweise vor dem Schritt d) erfolgt, wird vorzugsweise der mit dem ersten Glattwalzwerkzeug glattgewalzte Bereich der Werkstückoberfläche anschließend beschichtet. Wenn der Schritt c) wenigstens zeitweise nach dem Schritt d) erfolgt, wird vorzugsweise der beschichtete Bereich der Werkstückoberfläche anschließend mit dem ersten Glattwalzwerkzeug glattgewalzt. Wenn der Schritt c) wenigstens zeitweise vor dem Schritt d) erfolgt und der Schritt c) wenigstens zeitweise nach dem Schritt d) erfolgt, wird vorzugsweise der mit dem ersten Glattwalzwerkzeug glattgewalzte Bereich der Werkstückoberfläche anschließend beschichtet und hierauf anschließend der beschichtete Bereich der Werkstückoberfläche erneut mit dem ersten Glattwalzwerkzeug glattgewalzt. Der Schritt c) und der Schritt d) können dabei wenigstens zeitweise zeitgleich erfolgen. Hierdurch kann eine hohe Bearbeitungsgeschwindigkeit erreicht werden. Vorteilhafterweise wird in diesem Fall ein bereits glattgewalzter Bereich der Werkstückoberfläche beschichtet und wenigstens zeitweise zeitgleich ein weiterer Bereich der Werkstückoberfläche glattgewalzt und/oder es wird ein bereits beschichteter Bereich der Werkstückoberfläche glattgewalzt und wenigstens zeitweise zeitgleich ein weiterer Bereich der Werkstückoberfläche beschichtet. Ebenso kann vorgesehen sein, dass der Schritt c) vollständig vor dem Schritt d) erfolgt und/oder der Schritt c) vollständig nach dem Schritt d) erfolgt. Wenn der Schritt c) vollständig vor dem Schritt d) und vollständig nach dem Schritt d) erfolgt, erfolgt der Schritt c) während dem Verfahren wenigstens zweimal. Des Weiteren kann es vorgesehen sein, dass die Schritte c) und d) in mehreren Teilschritten erfolgen. Hierbei werden die Schritte c) und d) zunächst an einem ersten Bereich der Werkstückoberfläche durchgeführt. Der Schritte c) und d) können dabei wenigstens zeitweise zeitgleich erfolgen. Alternativ kann dabei der Schritt c) vollständig vor dem Schritt d) und/oder der Schritt c) vollständig nach dem Schritt d) erfolgen. Nach der Durchführung der Schritte c) und d) an dem ersten Bereich der Werkstückoberfläche, werden die Schritt c) und d) anschließend an wenigstens einem weiteren Bereich der Werkstückoberfläche durchgeführt.

Eine Ausführungsform des Verfahrens zeichnet sich dadurch aus, dass das erste Glattwalzwerkzeug eine Mittelachse umfasst und dass, vorzugsweise, sich die erste Glattwalzoberfläche wenigstens abschnittsweise um die Mittelachse herum in Umfangsrichtung erstreckt. Vorteilhafterweise ist das erste Glattwalzwerkzeug und/oder die erste Glattwalzoberfläche wenigstens abschnittsweise symmetrisch, vorzugsweise rotationssymmetrisch, zu der Mittelachse ausgestaltet. Die erste Glattwalzoberfläche kann sich außerdem im Wesentlichen vollständig um die Mittelachse herum in Umfangsrichtung erstrecken. Die erste Glattwalzoberfläche kann sich zudem wenigstens abschnittsweise, vorzugsweise im Wesentlichen vollständig, in und/oder entgegen der Erstreckungsrichtung der Mittelachse erstrecken. Die erste Glattwalzoberfläche erstreckt sich dabei vorteilhafterweise im Wesentlichen parallel in und/oder entgegen der Erstreckungsrichtung der Mittelachse. Die erste Glattwalzoberfläche kann dann insbesondere wenigstens abschnittsweise, vorzugsweise im Wesentlichen vollständig, zylinderförmig ausgestaltet sein, wobei die Mittelachse die Zylinderachse bildet. Alternativ oder zusätzlich kann sich die erste Glattwalzoberfläche wenigstens abschnittsweise, vorzugsweise im Wesentlichen vollständig, in und/oder entgegen der Erstreckungsrichtung der Mittelachse relativ zu der Mittelachse gekrümmt, vorzugsweise bogenförmig, erstrecken. Die erste Glattwalzoberfläche kann in diesem Fall wenigstens abschnittsweise, vorzugsweise im Wesentlichen vollständig, torusförmig ausgestaltet sein.

Gemäß der Erfindung, umfasst das erste Glattwalzwerkzeug eine Seitenfläche, dass die Seitenfläche angrenzend an die erste Glattwalzoberfläche angeordnet ist und, vorzugsweise, dass die Seitenfläche sich wenigstens abschnittsweise im Wesentlichen senkrecht zu der Mittelachse des ersten Glattwalzwerkzeugs erstreckt. Alternativ oder zusätzlich erstreckt sich die Seitenfläche wenigstens abschnittsweise zwischen der ersten Glattwalzoberfläche und der Mittelachse und, vorzugsweise, wenigstens abschnittsweise radial um die Mittelachse herum. Das erste Glattwalzwerkzeug kann zudem wenigstens zwei Seitenflächen umfassen, wobei die Seitenflächen jeweils angrenzend an die erste Glattwalzoberfläche angeordnet sind und, vorzugsweise, wobei die Seitenfläche sich jeweils wenigstens abschnittsweise im Wesentlichen senkrecht zu der Mittelachse des ersten Glattwalzwerkzeugs erstrecken. Alternativ oder zusätzlich erstreckt sich die Seitenflächen jeweils wenigstens abschnittsweise zwischen der ersten Glattwalzoberfläche und der Mittelachse und, vorzugsweise, jeweils wenigstens abschnittsweise radial um die Mittelachse herum. Vorteilhafterweise liegen sich die Seitenflächen gegenüber. Ebenso kann vorgesehen sein, dass die Seitenflächen zueinander, vorzugsweise in und/oder entgegen der Erstreckungsrichtung der Mittelache, beabstandet sind.

Gemäß der Erfindung umfasst das erste Glattwalzwerkzeug, insbesondere die erste Glattwalzoberfläche und/oder die Seitenfläche, ein Strukturelement, vorzugsweise ein mittels Laserstrukturieren erzeugtes Strukturelement.

Durch ein entsprechendes Strukturelement kann mittels des ersten Glattwalzwerkzeugs, insbesondere mittels der ersten Glattwalzoberfläche, im Schritt c) eine strukturierte Werkstückoberfläche auf dem Werkstück erzeugt werden. Hierdurch kann die Haftung einer Beschichtung auf dem Werkstück mittels mechanischer Adhäsion verbessert werden. Zudem kann durch ein Strukturelement auf dem ersten Glattwalzwerkzeug, vorzugsweise auf der Seitenfläche, beim Glattwalzen eingesetztes Kühl- und/oder Schmiermittel effektiv abgeleitet werden. Das Strukturelement kann als Erhebung und/oder Vertiefung ausgestaltet sein. Das erste Glattwalzwerkzeug, insbesondere die erste Glattwalzoberfläche und/oder die Seitenfläche, können zudem wenigstens zwei Strukturelemente umfassen.

Das Strukturelement kann vorteilhafterweise mittels Laserstrukturieren erzeugt werden. Beim Laserstrukturieren kann mittels eines Lasers Material auf der Oberfläche des ersten Glattwalzwerkzeugs geschmolzen werden, wobei sich das Material in der Schmelze erhaben ausdehnt und zu einer Erhebung erstarrt. Ebenso kann durch das Laserstrukturieren eine Vertiefung auf der Oberfläche des ersten Glattwalzwerkzeugs erzeugt werden. Eine Vertiefung kann durch das Abtragen von Material auf der Oberfläche des ersten Glattwalzwerkzeugs mittels eines Lasers erzeugt werden und/oder es kann sich eine Vertiefung aufgrund von Materialtransfer beim Erzeugen einer Erhebung auf der Oberfläche des ersten Glattwalzwerkzeugs bilden. Das Strukturelement bzw. die Strukturelemente sind vorteilhafterweise auf dem ersten Glattwalzwerkzeug, insbesondere der ersten Glattwalzoberfläche und/oder der Seitenfläche, deterministisch verteilt angeordnet oder stochastisch verteilt angeordnet.

Eine Ausgestaltung des Verfahrens zeichnet sich dadurch aus, dass das Strukturelement des ersten Glattwalzwerkzeugs, insbesondere der ersten Glattwalzoberfläche und/oder der Seitenfläche, wenigstens abschnittsweise punktförmig, kreisförmig, linienförmig und/oder sphärisch ausgestaltet ist. Vorzugsweise ist das Strukturelement des ersten Glattwalzwerkzeugs, insbesondere der ersten Glattwalzoberfläche und/oder der Seitenfläche, im Wesentlichen vollständig punktförmig, kreisförmig, linienförmig und/oder sphärisch ausgestaltet. Durch eine entsprechende Ausgestaltung des Strukturelements können die Eigenschaften des glatt zu walzenden Werkstücks gezielt verändert werden. Wenn das erste Glattwalzwerkzeug, insbesondere die erste Glattwalzoberfläche und/oder die Seitenfläche, wenigstens zwei Strukturelemente umfasst, kann vorgesehen sein, dass wenigstens ein Teil der Strukturelemente gleichartig ausgestaltet ist und/oder wenigstens ein Teil der Strukturelemente unterschiedlich ausgestaltet ist. Beispielsweise kann wenigstens ein Teil der Strukturelemente wenigstens abschnittsweise, vorzugsweise im Wesentlichen vollständig, linienförmig ausgestaltet sein. Es kann jedoch auch vorgesehen sein, dass im Wesentlichen alle Strukturelemente auf dem Glattwalzwerkzeug, insbesondere auf der ersten Glattwalzoberfläche und/oder auf den Seitenflächen, gleichartig oder unterschiedlich ausgestaltet sind. Beispielsweise können im Wesentlichen alle Strukturelemente wenigstens abschnittsweise, vorzugsweise im Wesentlichen vollständig, linienförmig ausgestaltet sein. Wenn das erste Glattwalzwerkzeug, insbesondere die erste Glattwalzoberfläche und/oder die Seitenfläche, wenigstens zwei Strukturelemente umfasst, kann zudem vorgesehen sein, dass wenigstens ein Teil der Strukturelemente gleichartig ausgerichtet ist und/oder wenigstens ein Teil der Strukturelemente unterschiedlich ausgerichtet ist. Wenn ein Teil der Strukturelemente unterschiedlich ausgerichtet ist, können beispielsweise wenigstens zwei Strukturelemente überkreuzend angeordnet sein. Wenn ein Teil der Strukturelemente gleichartig ausgerichtet ist, können beispielsweise wenigstens zwei Strukturelemente sich jeweils parallel zu der Mittelachse des ersten Glattwalzwerkzeugs erstrecken. Die Strukturelemente können zudem gleichmäßig verteilt um die Mittelachse des ersten Glattwalzwerkzeugs herum angeordnet sein, unregelmäßig verteilt um die Mittelachse des ersten Glattwalzwerkzeugs herum angeordnet sein und/oder in einem sich wiederholenden Muster um die Mittelachse des ersten Glattwalzwerkzeugs herum angeordnet sein. Durch eine unregelmäßige verteilte Anordnung der Strukturelemente um die Mittelachse des ersten Glattwalzwerkzeugs herum wird beispielsweise eine vollständige Strukturierung der Werkstückoberfläche beim mehrmaligen Walzen gewährleistet. Wenn die Strukturelemente unregelmäßig um die Mittelachse des ersten Glattwalzwerkzeugs herum angeordnet sind und gleichzeitig gleichmäßig verteilt um die Mittelachse des ersten Glattwalzwerkzeugs herum angeordnet sind und/oder in einem sich wiederholenden Muster um die Mittelachse des ersten Glattwalzwerkzeugs herum angeordnet sind, ist ein Teil der Strukturelemente unregelmäßig verteilt angeordnet und ein anderer Teil der Strukturelemente gleichmäßig verteilt angeordnet und/oder in einem sich wiederholenden Muster angeordnet. Das Strukturelement oder die Strukturelemente können zudem derart ausgestaltet sein, dass sich das Strukturelement oder die Strukturelemente überwiegend in und/oder entgegen der Erstreckungsrichtung der Mittelachse des ersten Glattwalzwerkzeugs erstrecken.

Gemäß einer Ausgestaltung des Verfahrens ist vorgesehen, dass sich das Strukturelement, insbesondere auf der ersten Glattwalzoberfläche, wenigstens abschnittsweise im Wesentlichen parallel zu der Mittelachse des ersten Glattwalzwerkzeugs erstreckt. Die sich hieraus beim Glattwalzen ergebende strukturierte Werkstückoberfläche eignet sich besonders für das Aufnehmen von Schmiermitteln und Schmutzpartikeln bzw. trägt besonders zur Haftung einer aufzubringenden Beschichtung bei. Vorteilhafterweise erstreckt sich das Strukturelement im Wesentlichen vollständig parallel zu der Mittelachse des ersten Glattwalzwerkzeugs. Das Strukturelement kann bei einer parallelen Erstreckung zu der Mittelachse des ersten Glattwalzwerkzeugs vorzugsweise linienförmig ausgestaltet sein. Wenn das erste Glattwalzwerkzeug, insbesondere die erste Glattwalzoberfläche, wenigstens zwei Strukturelemente umfasst, kann sich wenigstens ein Teil der Strukturelemente, vorzugsweise im Wesentlichen alle Strukturelemente, jeweils wenigstens abschnittsweise im Wesentlichen parallel zu der Mittelachse des ersten Glattwalzwerkzeugs erstrecken. Die Strukturelemente können sich dabei auf der ersten Glattwalzoberfläche im Wesentlichen parallel zu der Mittelachse erstrecken und/oder die Strukturelemente können sich im Wesentlichen vollständig parallel zu der Mittelachse erstrecken. Alternativ oder zusätzlich können sich das Strukturelement oder bei wenigstens zwei Strukturelementen wenigstens ein Teil der Strukturelemente, vorzugsweise im Wesentlichen alle Strukturelemente, quer zu der Mittelachse des ersten Glattwalzwerkzeugs erstrecken. Wenn das erste Glattwalzwerkzeug, insbesondere die erste Glattwalzoberfläche, wenigstens zwei Strukturelemente umfasst, können die Strukturelemente zudem gleichmäßig verteilt um die Mittelachse herum angeordnet sein.

Eine weitere Ausführungsform des Verfahrens zeichnet sich dadurch aus, dass sich das Strukturelement, insbesondere auf der Seitenfläche, wenigstens abschnittsweise im Wesentlichen senkrecht zu der Mittelachse des ersten Glattwalzwerkzeugs erstreckt. Durch eine entsprechende Ausgestaltung des Strukturelements, insbesondere auf der Seitenfläche des ersten Glattwalzwerkzeugs, kann beim Glattwalzen eingesetztes Kühl- und/oder Schmiermittel durch das Strukturelemente besonders effektiv von der ersten Glattwalzoberfläche abgeleitet werden. Vorteilhafterweise erstreckt sich das Strukturelement im Wesentlichen vollständig senkrecht zu der Mittelachse des ersten Glattwalzwerkzeugs. Das Strukturelement kann dabei vorzugsweise linienförmig ausgestaltet sein. Wenn das erste Glattwalzwerkzeug, insbesondere die Seitenfläche, wenigstens zwei Strukturelemente umfasst, kann sich wenigstens ein Teil der Strukturelemente, vorzugsweise im Wesentlichen alle Strukturelemente, jeweils wenigstens abschnittsweise im Wesentlichen senkrecht zu der Mittelachse des ersten Glattwalzwerkzeugs erstrecken. Die Strukturelemente können sich dabei auf der Seitenfläche wenigstens abschnittsweise im Wesentlichen senkrecht zu der Mittelachse erstrecken und/oder die Strukturelemente können sich im Wesentlichen vollständig senkrecht zu der Mittelachse erstrecken. Bei wenigstens zwei Strukturelemente kann zudem vorgesehen sein, dass die Strukturelemente gleichmäßig verteilt um die Mittelachse des ersten Glattwalzwerkzeugs herum angeordnet sind.

Alternativ oder zusätzlich kann zudem vorgesehen sein, dass sich das Strukturelement, insbesondere auf der Seitenfläche, radial zu der Mittelachse erstreckt.

Eine Ausgestaltung des Verfahrens sieht vor, dass in Schritt c) mittels des Strukturelements des ersten Glattwalzwerkzeugs, insbesondere des Strukturelements der ersten Glattwalzoberfläche, in der Werkstückoberfläche des Werkstücks eine Vertiefung gebildet wird und/oder mittels des Strukturelements des ersten Glattwalzwerkzeugs, insbesondere des Strukturelements der ersten Glattwalzoberfläche, in der Werkstückoberfläche des Werkstücks eine Erhebung gebildet wird. Hierdurch kann durch das erste Glattwalzwerkzeug, insbesondere durch die erste Glattwalzoberfläche, eine strukturierte Werkstückoberfläche erzeugt werden. Das Werkstück, insbesondere die Werkstückoberfläche, weist somit nach dem Schritt c) eine Vertiefung und/oder eine Erhebung auf, vorzugsweise wenigstens zwei Vertiefungen und/oder wenigstens zwei Erhebungen auf. Eine entsprechende Vertiefung und/oder Erhebung in der Werkstückoberfläche eignet sich insbesondere zur Aufnahme und/oder zum Rückhalten von Schmiermitteln und Schmutzpartikeln. Um im Schritt c) eine Vertiefung in der Werkstückoberfläche des Werkstücks zu erzeugen, ist das Strukturelement des ersten Glattwalzwerkzeugs vorzugsweise als Erhebung ausgestaltet. Um im Schritt c) eine Erhebung in der Werkstückoberfläche des Werkstücks zu erzeugen, ist das Strukturelement des ersten Glattwalzwerkzeugs vorzugsweise als Vertiefung ausgestaltet. Wenn das erste Glattwalzwerkzeug, insbesondere die erste Glattwalzoberfläche, wenigstens zwei Strukturelemente umfasst, können in Schritt c) mittels der Strukturelemente des ersten Glattwalzwerkzeugs in der Werkstückoberfläche des Werkstücks wenigstens zwei Vertiefungen und/oder wenigstens zwei Erhebungen gebildet werden.

Eine Ausgestaltung des Verfahrens zeichnet sich durch die folgenden Schritte aus: b1) Bereitstellen eines zweiten Glattwalzwerkzeugs, wobei das zweite Glattwalzwerkzeug eine zweite Glattwalzoberfläche zum Glattwalzen von Werkstücken umfasst, und c1) Glattwalzen des Werkstücks mittels des zweiten Glattwalzwerkzeugs, wobei beim Glattwalzen des Werkstücks mittels des zweiten Glattwalzwerkezugs die zweite Glattwalzoberfläche die Werkstückoberfläche des Werkstücks kontaktiert und glattwalzt. Durch das Bereitstellen eines zweiten Glattwalzwerkzeugs sowie das Glattwalzen mittels des zweiten Glattwalzwerkzeugs kann das Werkstück durch verschiedene Glattwalzwerkzeuge, vorzugsweise mit unterschiedlich ausgestalteten Glattwalzoberflächen, glattgewalzt werden. Hierdurch können die tribologischen Eigenschaften das Werkstück, insbesondere der Werkstückoberfläche, durch das jeweilige Glattwalzwerkzeuge unterschiedlich beeinflusst werden. Das zweite Glattwalzwerkzeug, insbesondere die zweite Glattwalzoberfläche, kann wenigstens abschnittsweise rund und/oder wenigstens abschnittsweise rotationssymmetrisch ausgestaltet sein. Hierdurch kann das Glattwalzen vereinfacht werden, da das zweite Glattwalzwerkzeug, insbesondere die zweite Glattwalzoberfläche, an dem glatt zu walzenden Werkstück besonders leicht abrollen kann und/oder das glatt zu walzende Werkstück an dem zweiten Glattwalzwerkzeug, insbesondere der zweiten Glattwalzoberfläche, besonders leicht abrollen kann. Vorzugsweise ist das zweite Glattwalzwerkzeug eine Glattwalzrolle. Es bietet sich zudem an, dass das zweite Glattwalzwerkzeug, insbesondere die zweite Glattwalzoberfläche, drehbar gelagert ist. Das zweite Glattwalzwerkzeug, vorzugsweise die zweite Glattwalzoberfläche, kann aus Metall, insbesondere Stahl, hergestellt sein. Hierdurch lässt sich eine hohe Standzeit des zweiten Glattwalzwerkzeugs erreichen. Vorzugsweise rollt beim Glattwalzen im Schritt c1) die zweite Glattwalzoberfläche an dem Werkstück, insbesondere der Werkstückoberfläche, ab und/oder das Werkstück, insbesondere die Werkstückoberfläche, rollt beim Glattwalzen im Schritt c1) an der zweiten Glattwalzoberfläche ab. Die glatt zu walzenden Stellen des Werkstücks sind dabei vorteilhafterweise wenigstens abschnittsweise rund und/oder im Wesentlichen rotationssymmetrisch ausgestaltet. Während dem Schritt c1) wird zudem vorzugsweise eine Funktionsfläche des Werkstücks, insbesondere eine Lagerstelle des Werkstücks, glattgewalzt. Es wird im Schritt c1) vorteilhafterweise derselbe Bereich des Werkstücks, insbesondere dieselbe Funktionsfläche, weitere insbesondere dieselbe Lagerstelle, glattgewalzt wie in Schritt c). Beim Schritt c1) kann zudem vorgesehen sein, dass beim Glattwalzen des Werkstücks mittels des zweiten Glattwalzwerkezugs die zweite Glattwalzoberfläche das Werkstück, insbesondere die Werkstückoberfläche, verfestigt, vorzugsweise kaltverfestigt. Um die Haftung mittels spezifischen Adhäsion zu verbessern, bietet es sich außerdem an, dass die Werkstückoberfläche, vorzugsweise zu Beginn des Schritts d), wenigstens abschnittsweise glatt ist. Die wenigstens abschnittsweise glatte Werkstückoberfläche kann dabei im Schritt c1) durch das Glattwalzen mittels des zweiten Glattwalzwerkzeugs erzeugt werden.

Gemäß einer weiteren Ausführungsform des Verfahrens ist vorgesehen, dass die zweite Glattwalzoberfläche des in Schritt b1) bereitgestellten zweiten Glattwalzwerkzeugs wenigstens abschnittsweise im Wesentlichen glatt ausgestaltet ist. Durch eine entsprechende Ausgestaltung der zweiten Glattwalzoberfläche kann im Schritt c1) die Werkstückoberfläche geglättet werden und, vorzugsweise, eine wenigstens abschnittsweise, insbesondere im Wesentlichen vollständig, glatte Werkstückoberfläche erzeugt werden. Hierdurch kann wiederum ein Haften der Beschichtung mittels spezifischer Adhäsion im Schritt d) und/oder nach dem Schritt d) verbessert werden. Ebenso kann durch eine glatte zweite Glattwalzoberfläche beim Glattwalzen, vorzugsweise nach dem Schritt d), die Werkstoffoberfläche besonders effizient verfestigt, insbesondere kaltverfestigt, werden und somit eine Festigkeitssteigerung des Werkstücks erreicht werden. Eine wenigstens im Wesentlichen glatte Glattwalzoberfläche umfasst vorteilhafterweise keine, vorzugsweise mittels Laserstrukturieren erzeugte, Strukturelemente. Die zweite Glattwalzoberfläche kann zudem vollständig im Wesentlichen glatt ausgestaltet sein. Das zweite Glattwalzwerkzeug, insbesondere die zweite Glattwalzoberfläche, ist vorzugsweise glatter als das Strukturelement des ersten Glattwalzwerkzeugs, insbesondere glatter als das Strukturelement der ersten Glattwalzoberfläche. Hierunter ist insbesondere zu verstehen, dass das zweite Glattwalzwerkzeug, insbesondere die zweite Glattwalzoberfläche einen niedrigeren Mittenrauwert Rₐ aufweist als das Strukturelement des ersten Glattwalzwerkzeugs, insbesondere als das Strukturelement der ersten Glattwalzoberfläche.

Eine Ausgestaltung des Verfahrens zeichnet sich dadurch aus, dass der Schritt c1) wenigstens zeitweise nach dem Schritt c) erfolgt und, vorzugsweise, dass der Schritt c1) wenigstens zeitweise vor dem Schritt d) erfolgt. Insbesondere wenn hierbei die erste Glattwalzoberfläche wenigstens ein Strukturelement, vorzugsweise eine Erhebung, umfasst und die zweite Glattwalzoberfläche wenigstens abschnittsweise im Wesentlichen glatt ausgestaltet ist, kann durch eine entsprechende Abfolge der Schritte das Haften einer Beschichtung verbessert werden. Wird zunächst das Werkstück mit der ersten Glattwalzoberfläche umfassend ein Strukturelement glattgewalzt, werden Vertiefungen und/oder Erhebungen auf der Werkstückoberfläche gebildet. Hierdurch wird die mechanische Adhäsion zwischen Werkstück und aufzubringender Beschichtung verbessert. Ein anschließendes Glattwalzen mit der glatten zweiten Glattwalzoberfläche kann zwar einen Teil der zuvor gebildeten Vertiefungen und/oder Erhebungen entfernen, jedoch werden insbesondere die Bereiche zwischen den Vertiefungen und/oder Erhebungen auf der Werkstückoberfläche geglättet. Dies verbessert wiederum die spezifische Adhäsion zwischen Werkstück und aufzubringender Beschichtung. Hierdurch wird eine besonders gute Haftung der aufzubringenden Beschichtung erreicht. Durch eine entsprechende Abfolge der Schritte können zudem bei einer unbeschichteten Werkstückoberfläche die Aufnahme bzw. das Zurückhalten von Schmiermitteln und Schmutzpartikel verbessert werden ohne die Gleiteigenschaften der Werkstückoberfläche zu sehr zu vermindern.

Wenn der Schritt c1) wenigstens zeitweise nach dem Schritt c) erfolgt, wird vorzugsweise der mit dem ersten Glattwalzwerkzeug glattgewalzte Bereich der Werkstückoberfläche anschließend mit dem zweiten Glattwalzwerkzeug glattgewalzt. Wenn der Schritt c1) wenigstens zeitweise vor dem Schritt d) erfolgt, wird vorzugsweise der mit dem zweiten Glattwalzwerkzeug glattgewalzte Bereich der Werkstückoberfläche anschließend beschichtet. Vorteilhafterweise erfolgt der Schritt c) zudem wenigstens zeitweise vor dem Schritt c1). Der Schritt c) und der Schritt c1), vorzugsweise der Schritt c), der Schritt c1) und der Schritt d), können dabei wenigstens zeitweise zeitgleich erfolgen. Hierdurch kann eine hohe Bearbeitungsgeschwindigkeit erreicht werden. Vorzugsweise wird in diesem Fall ein bereits mit dem ersten Glattwalzwerkzeug glattgewalzter Bereich der Werkstückoberfläche mit dem zweiten Glattwalzwerkzeug glattgewalzt und zeitgleich ein weiterer Bereich der Werkstückoberfläche mit dem ersten Glattwalzwerkzeug glattgewalzt und, vorzugsweise, zeitgleich ein bereits mit dem zweiten Glattwalzwerkzeug glattgewalzter Bereich der Werkstückoberfläche beschichtet. Ebenso kann vorgesehen sein, dass der Schritt c1) vollständig nach dem Schritt c) und/oder vollständig vor dem Schritt d) erfolgt. Des Weiteren kann vorgesehen sein, dass der Schritt c) und der Schritt c1), vorzugsweise der Schritt c), der Schritt c1) und der Schritt d), in mehreren Teilschritten erfolgen. Hierbei wird der Schritt c), der Schritt c1) und vorzugsweise der Schritt d) zunächst an einem ersten Bereich der Werkstückoberfläche durchgeführt. Nach der Durchführung des Schritts c), des Schritts c1) und vorzugsweise des Schritts d) an dem ersten Bereich der Werkstückoberfläche, werden der Schritt c), der Schritt c1) und vorzugsweise der Schritt d) anschließend an wenigstens einem weiteren Bereich der Werkstückoberfläche durchgeführt.

Alternativ oder zusätzlich kann zudem vorgesehen sein, dass der Schritt c1) wenigstens zeitweise nach dem Schritt d) erfolgt. Der Schritt c1) kann somit vor und/oder nach dem Schritt c) erfolgen. Ebenso kann der Schritt c1) vor und/oder nach dem Schritt d) erfolgen. Der Schritt c1) kann somit wenigstens zweimal während des Verfahrens erfolgen. Wenn der Schritt c1) wenigstens zeitweise nach dem Schritt d) erfolgt, wird vorzugsweise der beschichtete Bereich der Werkstückoberfläche anschließend mit dem zweiten Glattwalzwerkzeug glattgewalzt. Der Schritt c1) und der Schritt d), können dabei wenigstens zeitweise zeitgleich erfolgen. Hierdurch kann eine hohe Bearbeitungsgeschwindigkeit erreicht werden. Vorzugsweise wird in diesem Fall ein bereits beschichteter Bereich der Werkstückoberfläche mit dem zweiten Glattwalzwerkzeug glattgewalzt und zeitgleich ein weiterer Bereich der Werkstückoberfläche beschichtet. Ebenso kann vorgesehen sein, dass der Schritt c1) vollständig vor dem Schritt d) und/oder vollständig nach dem Schritt d) erfolgt. Des Weiteren kann vorgesehen sein, dass die Schritt c1) und d) in mehreren Teilschritten erfolgen. Hierbei werden die Schritt c1) und d) zunächst an einem ersten Bereich der Werkstückoberfläche durchgeführt. Nach der Durchführung der Schritte c1) und d) an dem ersten Bereich der Werkstückoberfläche, werden die Schritte c1) und d) anschließend an wenigstens einem weiteren Bereich der Werkstückoberfläche durchgeführt.

Gemäß einer Ausführungsform des Verfahrens ist vorgesehen, dass die Werkstückoberfläche des in Schritt a) bereitgestellten Werkstücks einen Rvk-Wert und einen Rpk-Wert aufweist, dass das Verhältnis von Rvk-Wert zu Rpk-Wert nach dem Schritt c1) höher ist als das Verhältnis von Rvk-Wert zu Rpk-Wert vor dem Schritt c), und dass, vorzugsweise, das Verhältnis von Rvk-Wert zu Rpk-Wert im Schritt c) durch das Glattwalzen des Werkstücks mittels des ersten Glattwalzwerkzeugs, insbesondere mittels des Strukturelements des ersten Glattwalzwerkzeugs, erhöht wird. Hierbei ist es vorzugsweise vorgesehen, dass zwischen dem Schritt c) und dem c1) kein Beschichten, insbesondere nicht der Schritt d), erfolgt. Zudem erfolgt der Schritt c) insbesondere wenigstens abschnittsweise vor dem Schritt c1). Besonders vorzugsweise wird der Rvk-Wert, insbesondere während dem Schritt c), im Vergleich von vor dem Schritt c) zu nach dem Schritt c1) erhöht. Der Rvk-Wert der Werkstückoberfläche ist somit nach dem Schritt c1) höher als der Rvk-Wert der Werkstückoberfläche vor dem Schritt c) und/oder dem Schritt c1). Das Verhältnis von Rvk-Wert zu Rpk-Wert im Schritt c) wird zudem insbesondere durch das Glattwalzen des Werkstücks mittels des Strukturelements der ersten Glattwalzoberfläche erhöht. Nach DIN EN ISO 13565-2:1998-04 ist der Rpk-Wert die reduzierte Spitzenhöhe und gibt die mittlere Höhe der über dem Rauheitskernprofil herausragenden Spitzen an. Der Rvk-Wert ist nach DIN EN ISO 13565-2:1998-04 die reduzierte Riefentiefe und gibt die mittlere Tiefe der Profiltäler unterhalb des Rauheitskernprofils an. Durch eine entsprechende Erhöhung des Verhältnisses von Rvk-Wert zu Rpk-Wert der Werkstückoberfläche liegen mehr und/oder tiefere Riefen bzw. Vertiefungen in der Werkstückoberfläche vor, wodurch insbesondere Schmiermittel und Schmutzpartikel besser von der Werkstückoberfläche aufgenommen und/oder zurückgehalten werden können. Zudem kann durch eine Erhöhung des Verhältnisses von Rvk-Wert zu Rpk-Wert bei einem nachfolgenden Beschichten die Haftung der Beschichtung, insbesondere mittels mechanischer Adhäsion, verbessert werden.

Die Erfindung wird nachfolgend anhand einer lediglich bevorzugte Ausführungsbeispiele darstellenden Zeichnung näher erläutert. In der Zeichnung zeigen:
- Fig. 1A:: ein erstes Glattwalzwerkzeug, welches für den Einsatz in einem erfindungsgemäßen Verfahren vorgesehen ist, in einer Seitenansicht,
- Fig. 1B:: das Glattwalzwerkzeug aus Fig. 1A in einer Vorderansicht,
- Fig. 1C:: das Glattwalzwerkzeug aus Fig. 1A in einer perspektivischen Ansicht,
- Fig. 2A:: eine erste Variante der Oberfläche eines ersten Glattwalzwerkzeugs,
- Fig. 2B:: eine zweite Variante der Oberfläche eines ersten Glattwalzwerkzeugs,
- Fig. 2C:: eine dritte Variante der Oberfläche eines ersten Glattwalzwerkzeugs,
- Fig. 2D:: eine vierte Variante der Oberfläche eines ersten Glattwalzwerkzeugs,
- Fig. 2E:: eine fünfte Variante der Oberfläche eines ersten Glattwalzwerkzeugs,
- Fig. 3:: den Schritt c) des Verfahrens in einer geschnittenen Seitenansicht, wobei die erste Glattwalzoberfläche des ersten Glattwalzwerkzeugs als Strukturelemente Erhebungen und Vertiefungen umfasst,
- Fig. 4:: den Schritt c) des Verfahrens in einer geschnittenen Seitenansicht, wobei die erste Glattwalzoberfläche des ersten Glattwalzwerkzeugs als Strukturelemente Erhebungen umfasst,
- Fig. 5:: den Schritt c) des Verfahrens in einer geschnittenen Seitenansicht, wobei die erste Glattwalzoberfläche des ersten Glattwalzwerkzeugs glatt ausgestaltet ist,
- Fig. 6:: den Schritt c1) des Verfahrens in einer geschnittenen Seitenansicht, wobei die zweite Glattwalzoberfläche des zweiten Glattwalzwerkzeugs glatt ausgestaltet ist,
- Fig. 7A:: den Schritt d) des Verfahrens in einer geschnittenen Seitenansicht, wobei der Schritt c) zuvor mit einem ersten Glattwalzwerkzeug mit einer glatten ersten Glattwalzoberfläche erfolgt ist,
- Fig. 7B:: den Schritt d) des Verfahrens in einer geschnittenen Seitenansicht, wobei der Schritt c) zuvor mit einem ersten Glattwalzwerkzeug mit einer ersten Glattwalzoberfläche umfassend Strukturelemente erfolgt ist,
- Fig. 8A:: den Schritt c1) des Verfahrens in einer geschnittenen Seitenansicht, wobei zuvor der Schritt c) mit einem ersten Glattwalzwerkzeug mit einer glatten ersten Glattwalzoberfläche und der Schritt d) erfolgt ist, und
- Fig. 8B:: den Schritt c1) des Verfahrens in einer geschnittenen Seitenansicht, wobei zuvor der Schritt c) mit einem ersten Glattwalzwerkzeug mit einer ersten Glattwalzoberfläche umfassend Strukturelemente und der Schritt d) erfolgt ist.

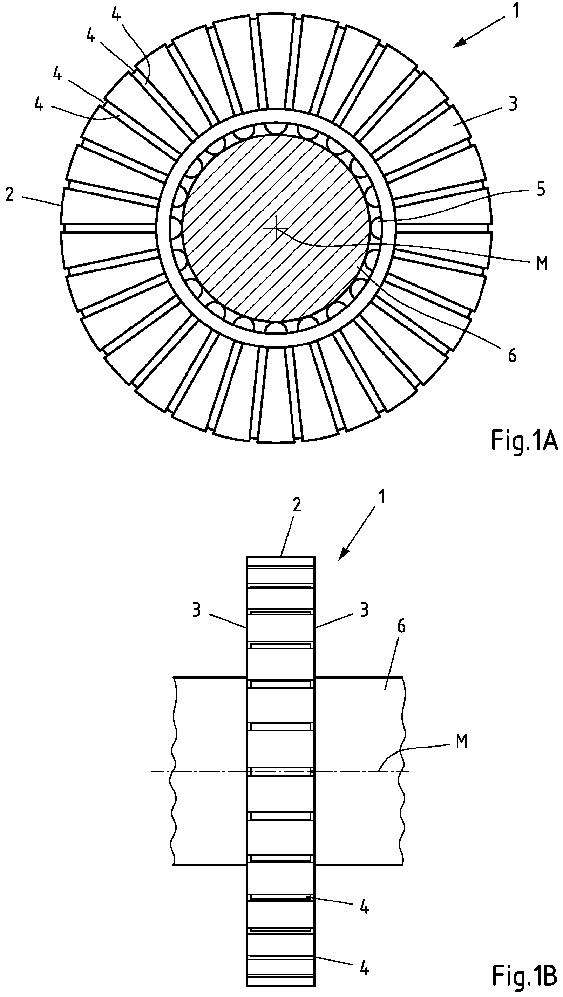

In Fig. 1A ist ein erstes Glattwalzwerkzeug 1, welches für die Verwendung in einem erfindungsgemäßen Verfahren vorgesehen ist, in einer Seitenansicht dargestellt. Bei dem dargestellten ersten Glattwalzwerkzeug 1 handelt es sich um eine von mehreren Varianten des ersten Glattwalzwerkzeugs 1. Das erste Glattwalzwerkzeug 1 umfasst dabei eine erste Glattwalzoberfläche 2 sowie zwei Seitenflächen 3. Das in Fig. 1A dargestellte erste Glattwalzwerkzeug 1 ist als Glattwalzrolle ausgestaltet.

Das erste Glattwalzwerkzeug 1 aus Fig. 1A weist eine Vielzahl von Strukturelementen 4 auf, die insbesondere auf der ersten Glattwalzoberfläche 2 sowie den beiden Seitenflächen 3 vorgesehen sind. Die Strukturelemente 4 wurden bei dem gezeigten ersten Glattwalzwerkzeug 1 mittels Laserstrukturieren erzeugt. Durch die Strukturelemente 4 kann beim Glattwalzen eines Werkstücks mit der ersten Glattwalzoberfläche 2 eine strukturierte Werkstückoberfläche auf dem Werkstück erzeugt werden. Die Strukturelemente 4 sind bei dem dargestellten ersten Glattwalzwerkzeug 1 jeweils als Vertiefung ausgestaltet. Das erste Glattwalzwerkzeug 1 kann jedoch auch alternativ oder zusätzlich Strukturelemente 4 umfassen, die jeweils als Erhebung ausgestaltet sind. Die Strukturelemente 4 sind bei dem ersten Glattwalzwerkzeug 1 gleichmäßig verteilt an den Seitenflächen 3 angeordnet. Es kann jedoch vorgesehen sein, dass wenigstens ein Teil der Strukturelemente 4 oder im Wesentlichen alle Strukturelemente 4 an den Seitenfläche 3 ungleichmäßig verteilt angeordnet sind. Durch die Strukturelemente 4 auf der ersten Glattwalzoberfläche 2 kann beim Glattwalzen eines Werkstücks eine strukturierte Werkstückoberfläche erzeugt werden. Hierbei werden insbesondere durch die jeweils als Vertiefung ausgestalteten Strukturelemente 4 Erhebungen in der Werkstückoberfläche erzeugt. Die Strukturelemente 4 in den Seitenflächen 3 können wiederum beim Glattwalzen eingesetzte Kühl-und/oder Schmiermittel leiten.

Das erste Glattwalzwerkzeug 1 weist außerdem eine Mittelachse M auf. Die erste Glattwalzoberfläche 2 erstreckt sich dabei in Umfangsrichtung um die Mittelachse M herum. Zudem erstreckt sich die erste Glattwalzoberfläche 2 entlang der Erstreckungsrichtung der Mittelachse M, also in und/oder entgegen der Erstreckungsrichtung der Mittelachse M - also axial. Bei dem dargestellten ersten Glattwalzwerkzeug 1 erstrecken sich die Seitenflächen 3 im Wesentlichen senkrecht zu der Mittelachse M, insbesondere radial. Die Strukturelemente 4 an den Seitenflächen 3 erstrecken sich ebenfalls im Wesentlichen senkrecht zu der Mittelachse M, insbesondere radial. Die Strukturelemente 4 an den Seitenflächen 3 sind zudem gleichmäßig verteilt um die Mittelachse M herum angeordnet. Die Seitenfläche 3 des ersten Glattwalzwerkzeugs 1 grenzen außerdem an die erste Glattwalzoberfläche 2 an und erstrecken sich zwischen der ersten Glattwalzoberfläche 2 und der Mittelachse M.

Das dargestellte erste Glattwalzwerkzeug 1 ist drehbar gelagert. Die drehbare Lagerung erfolgt vorliegend durch ein Wälzlager 5. Die drehbare Lagerung kann jedoch auch auf andere Weise erfolgen, beispielsweise durch ein Gleitlager. Das erste Glattwalzwerkzeug 1 ist vorliegend relativ zu der Mittelachse M und/oder um die Mittelachse M herum drehbar gelagert.

In der Fig. 1A ist zudem schematisch eine Werkzeugaufnahme 6 dargestellt, wobei das Glattwalzwerkzeug 1 relativ zu der Werkzeugaufnahme 6 drehbar gelagert ist. Jedoch kann es auch vorgesehen sein, dass das erste Glattwalzwerkzeug 1 starr mit der Werkzeugaufnahme 6 verbunden ist.

In der Fig. 1B ist das erste Glattwalzwerkzeug 1 aus Fig. 1A in einer Vorderansicht dargestellt. In Fig. 1B ist dabei zu erkennen, dass die Strukturelemente 4 auf der ersten Glattwalzoberfläche 2 gleichmäßig verteilt angeordnet sind. Es kann jedoch vorgesehen sein, dass wenigstens ein Teil der Strukturelemente 4 oder im Wesentlichen alle Strukturelemente 4 auf der ersten Glattwalzoberfläche 2 ungleichmäßig verteilt angeordnet sind. Die Strukturelemente 4 sind bei dem dargestellten ersten Glattwalzwerkzeug 1 zudem auf der ersten Glattwalzoberfläche 2 gleichmäßig verteilt um die Mittelachse M herum angeordnet. Die Strukturelemente 4 auf der ersten Glattwalzoberfläche 2 sind dabei linienförmig ausgestaltet. Die Strukturelemente 4 auf der ersten Glattwalzoberfläche 2 erstrecken sich zudem parallel zu der Mittelache M.

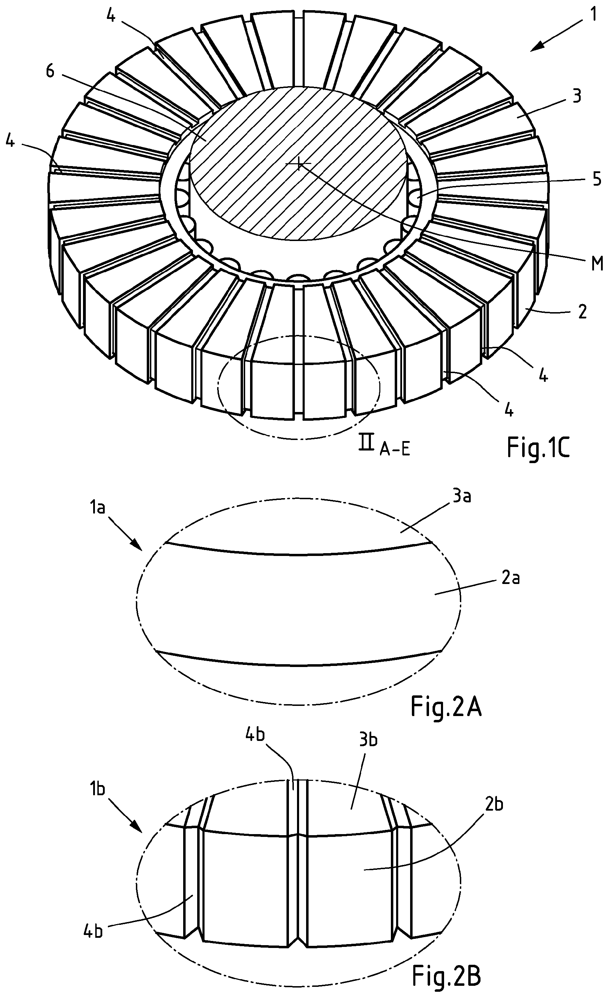

Die Fig. 1C zeigt das erste Glattwalzwerkzeug 1 aus Fig. 1A in einer perspektivischen Ansicht. Zu erkennen ist, dass die Strukturelemente 4 einen im Wesentlichen viereckigen Querschnitt aufweisen. Die Strukturelemente 4 können jedoch auch jede andere Querschnittsform aufweisen, beispielsweise ein runde, eine spitz zulaufende, eine dreieckige oder eine rechteckige Querschnittsform. Beim dem dargestellten ersten Glattwalzwerkzeug 1 grenzen Strukturelemente 4 auf den Seitenflächen 3 jeweils an Strukturelemente 4 auf der ersten Glattwalzoberfläche 2 an und gehen ineinander über. Dies ist jedoch nicht zwingend erforderlich, so können die Strukturelemente 4 auf den Seitenflächen 3 beispielsweise versetzt zu den Strukturelemente 4 auf der ersten Glattwalzoberfläche 2 angeordnet sein. Wie in den nachfolgenden Figuren 2B bis 2E dargestellt, können die Strukturelemente 4 des ersten Glattwalzwerkzeug 1, insbesondere auf der ersten Glattwalzoberfläche 2 und/oder auf den Seitenflächen 3, anderweitig ausgestaltet und angeordnet sein. Ebenso kann, wie nachfolgend in Fig. 2A dargestellt, das erste Glattwalzwerkzeug 1, insbesondere die erste Glattwalzoberfläche 2 und/oder die Seitenflächen 3, wenigstens abschnittsweise oder im Wesentlichen vollständig glatt ausgestaltet sein.

Die Fig. 2A bis 2E zeigen jeweils lediglich einen Ausschnitt der Oberfläche eines ersten Glattwalzwerkzeugs 1a, 1b, 1c, 1d, 1e, umfassend eine der Seitenflächen 3a, 3b, 3c, 3d, 3e und die erste Glattwalzoberfläche 2a, 2b, 2c, 2d, 2e. Die in diesen Ausschnitt dargestellten Ausgestaltungen der jeweiligen Seitenfläche 3a, 3b, 3c, 3d, 3e sowie der jeweiligen ersten Glattwalzoberfläche 2a, 2b, 2c, 2d, 2e sind jedoch jeweils vollständig auf die beiden Seitenflächen 3a, 3b, 3c, 3d, 3e sowie jeweils vollständig auf die erste Glattwalzoberfläche 2a, 2b, 2c, 2d, 2e zu übertragen. Die in den Fig. 2A bis 2E dargestellten Ausschnitte entsprechen dabei jeweils dem in Fig. 1C eingezeichneten Ausschnitt II_{A-E} des ersten Glattwalzwerkzeugs 1. Die Merkmale des Glattwalzwerkzeugs 1 aus den Fig. 1A bis 1C sind dabei grundsätzlich auf die ersten Glattwalzwerkzeuge 1a, 1b, 1c, 1d, 1e der Fig. 2A bis 2E übertragbar.

Die Fig. 2A zeigt eine erste Variante der Oberfläche eines ersten Glattwalzwerkzeugs 1a. Bei der in Fig. 2A dargestellten Variante der Oberfläche eines ersten Glattwalzwerkzeugs 1a sind sowohl die erste Glattwalzoberfläche 2a als auch die beiden Seitenflächen 3a glatt ausgestaltet. Insbesondere durch die glatte erste Glattwalzoberfläche 2a kann beim Glattwalzen eines Werkstücks die Werkstückoberfläche geglättet werden und eine glatte Werkstückoberfläche erzeugt werden.

Die Fig. 2B zeigt eine zweite Variante der Oberfläche eines ersten Glattwalzwerkzeugs 1b. Bei der in Fig. 2B dargestellten Variante der Oberfläche eines ersten Glattwalzwerkzeugs 1b umfassen sowohl die erste Glattwalzoberfläche 2b als auch die beiden Seitenflächen 3b Strukturelemente 4b. Die Strukturelemente 4b sind dabei sowohl auf der ersten Glattwalzoberfläche 2b als auch auf den beiden Seitenflächen 3b gleichmäßig verteilt angeordnet. Die Strukturelemente 4b sind zudem jeweils linienförmig ausgestaltet. Auf der ersten Glattwalzoberfläche 2b erstrecken sich die Strukturelemente 4b jeweils parallel zu der Mittelachse M (axial) und auf den Seitenflächen 3b erstrecken sich die Strukturelemente 4b jeweils senkrecht zu der Mittelachse M (radial). Die Strukturelemente 4b sind dabei jeweils Vertiefungen. Im Gegensatz zu den in den Figuren 1A bis 1C dargestellten Strukturelementen 4, weisen die Strukturelemente 4b in Fig. 2B jedoch einen spitz zulaufenden, insbesondere dreieckigen, Querschnitt auf.

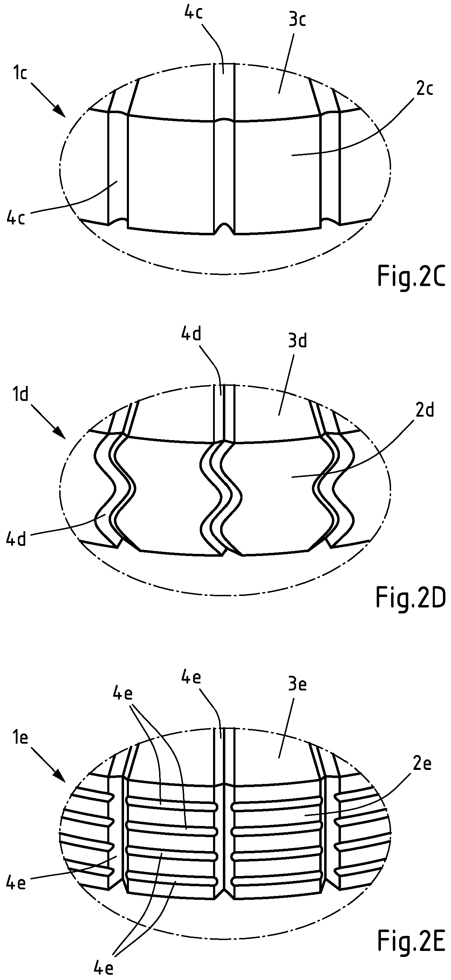

Die Fig. 2C zeigt eine dritte Variante der Oberfläche eines ersten Glattwalzwerkzeugs 1c. Bei der in Fig. 2C dargestellten Variante der Oberfläche eines ersten Glattwalzwerkzeugs 1c umfassen sowohl die erste Glattwalzoberfläche 2c als auch die beiden Seitenflächen 3c Strukturelemente 4c. Die Strukturelemente 4c sind dabei sowohl auf der ersten Glattwalzoberfläche 2c als auch auf den beiden Seitenflächen 3c gleichmäßig verteilt angeordnet. Die Strukturelemente 4c sind zudem jeweils linienförmig ausgestaltet. Auf der ersten Glattwalzoberfläche 2c erstrecken sich die Strukturelemente 4c jeweils parallel zu der Mittelachse M (axial) und auf den Seitenflächen 3c erstrecken sich die Strukturelemente 4c jeweils senkrecht zu der Mittelachse M (radial). Die Strukturelemente 4c sind dabei jeweils Vertiefungen. Im Gegensatz zu den in den Figuren 1A bis 1C dargestellten Strukturelementen 4, weisen die Strukturelemente 4c in Fig. 2C einen (halb-)runden Querschnitt auf.

Die Fig. 2D zeigt eine vierte Variante der Oberfläche eines ersten Glattwalzwerkzeugs 1d. Bei der in Fig. 2D dargestellten Variante der Oberfläche eines ersten Glattwalzwerkzeugs 1d umfassen sowohl die erste Glattwalzoberfläche 2d als auch die beiden Seitenflächen 3d Strukturelemente 4d. Die Strukturelemente 4d sind dabei sowohl auf der ersten Glattwalzoberfläche 2d als auch auf den beiden Seitenflächen 3d gleichmäßig verteilt angeordnet. Die Strukturelemente 4d sind zudem jeweils linienförmig ausgestaltet. Auf der ersten Glattwalzoberfläche 2d erstrecken sich die Strukturelemente 4d jeweils wellenförmig und auf den Seitenflächen 3d erstrecken sich die Strukturelemente 4d jeweils senkrecht zu der Mittelachse M (radial). Die Strukturelemente 4d sind dabei jeweils Vertiefungen. Im Gegensatz zu den in den Figuren 1A bis 1C dargestellten Strukturelementen 4, weisen die Strukturelemente 4d der Fig. 2D einen spitz zulaufenden Querschnitt auf.

Die Fig. 2E zeigt eine fünfte Variante der Oberfläche eines ersten Glattwalzwerkzeugs 1e. Bei der in Fig. 2E dargestellten Variante der Oberfläche eines ersten Glattwalzwerkzeugs 1e umfassen sowohl die erste Glattwalzoberfläche 2e als auch die beiden Seitenflächen 3e Strukturelemente 4e. Die Strukturelemente 4e sind dabei sowohl auf der ersten Glattwalzoberfläche 2e als auch auf den beiden Seitenflächen 3e gleichmäßig verteilt angeordnet. Die Strukturelemente 4e sind zudem jeweils linienförmig ausgestaltet. Auf der ersten Glattwalzoberfläche 2e erstreckt sich ein Teil der Strukturelemente 4e parallel zu der Mittelachse M (axial) und ein Teil der Strukturelemente 4e erstreckt sich quer zu der Mittelachse M. Die sich parallel zur Mittelachse M erstreckende Strukturelemente 4e und die sich quer zu der Mittelachse erstreckenden Strukturelemente 4e überschneiden bzw. kreuzen sich dabei abschnittsweise. Die Strukturelemente 4e auf den Seitenflächen 3e erstrecken sich wie in den vorherigen Varianten der Figuren 2B bis 2D jeweils senkrecht zu der Mittelachse M (radial). Die Strukturelemente 4e der Fig. 2E sind jeweils Vertiefungen. Die Strukturelemente 4e, die auf der ersten Glattwalzoberfläche 2e angeordnet sind und sich quer zu der Mittelachse M erstrecken, weisen dabei eine geringere Tiefe auf als die Strukturelemente 4e die auf der ersten Glattwalzoberfläche 2e angeordnet sind und sich parallel zu der Mittelachse M erstrecken. Die auf der ersten Glattwalzoberfläche 2e angeordneten Strukturelemente 4e können jedoch auch jeweils dieselbe Tiefe oder jedes andere Tiefenverhältnis aufweisen. Die Strukturelemente 4e, die auf der ersten Glattwalzoberfläche 2e angeordnet sind und sich quer zu der Mittelachse M erstrecken, weisen dabei einen (halb-)runden Querschnitt auf. Die Strukturelemente 4e, die auf der ersten Glattwalzoberfläche 2e angeordnet sind und sich parallel zu der Mittelachse M erstrecken, weisen wiederum einen spitz zulaufenden Querschnitt auf.

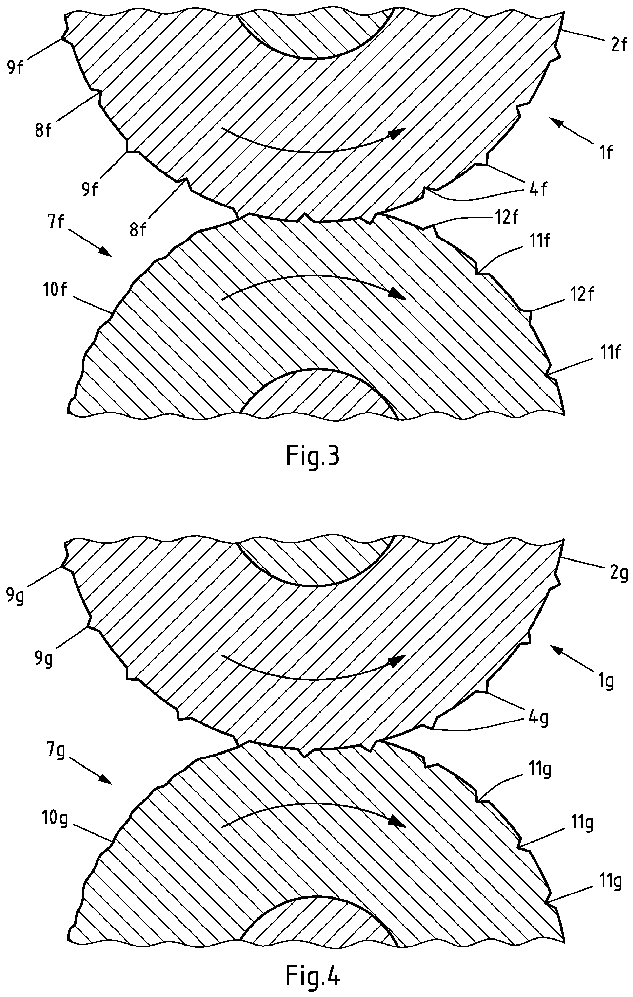

Die Fig. 3 zeigt den Schritt c) des Verfahrens in einer geschnittenen Seitenansicht, wobei die erste Glattwalzoberfläche 2f des ersten Glattwalzwerkzeugs 1f als Strukturelemente 4f Erhebungen 9f und Vertiefungen 8f umfasst. Bei dem in Fig. 3 dargestellten ersten Glattwalzwerkzeug 1f handelt es sich um eine Variante des ersten Glattwalzwerkzeugs 1 aus den Fig. 1A bis 1C, wobei die Merkmale des Glattwalzwerkzeugs 1 aus den Fig. 1A bis 1C grundsätzlich auf das erste Glattwalzwerkzeuge 1f der Fig. 3 übertragbar sind. Das erste Glattwalzwerkzeug 1f der Fig. 3 sowie das Werkstück 7f sind jeweils drehbar gelagert. Beim Glattwalzen rollen das erste Glattwalzwerkzeug 1f und das Werkstück 7f aneinander ab, wobei die erste Glattwalzoberfläche 2f die Werkstückoberfläche 10f kontaktiert. Beim Glattwalzen des Werkstücks 7f mittels des ersten Glattwalzwerkzeugs 1f kontaktiert und glattwalzt die erste Glattwalzoberfläche 2f die Werkstückoberfläche 10f des Werkstücks 7. Dabei werden mittels der Strukturelemente 4f des ersten Glattwalzwerkzeugs 1f, insbesondere der ersten Glattwalzoberfläche 2f, Vertiefungen 11f und Erhebungen 12f in dem Werkstück 7f, insbesondere in der Werkstückoberfläche 10f, gebildet. Hierdurch wird eine strukturierte Werkstückoberfläche 10f gebildet. Mittels derjenigen Strukturelemente 4f, die als Erhebungen 9f ausgestaltet sind, werden dabei insbesondere Vertiefungen 11f in dem Werkstück 7f, vorzugsweise der Werkstückoberfläche 10f, gebildet. Mittels derjenigen Strukturelemente 4f, die als Vertiefungen 8f ausgestaltet sind, werden wiederum insbesondere Erhebungen 12f in dem Werkstück 7f, vorzugsweise der Werkstückoberfläche 10f, gebildet. Ein entsprechend glattgewalztes Werkstück 7f eignet sich besonders für das Beschichten. Durch die beim Glattwalzen entstehenden Erhebungen 12f und Vertiefungen 11f kann die Haftung einer aufzubringenden Beschichtung mittels mechanischer Adhäsion verbessert werden. Ein entsprechend glattgewalztes Werkstück 7f eignet sich zudem besonders für das Aufnehmen von Schmiermitteln und Schmutzpartikeln. Hierdurch kann die Lebensdauer des Werkstücks 7f erhöht werden. Vorteilhafterweise wird das Werkstück 7f, insbesondere die Werkstückoberfläche 10f, durch das Glattwalzen zudem kaltverfestigt.

Die Fig. 4 zeigt den Schritt c) des Verfahrens in einer geschnittenen Seitenansicht, wobei die erste Glattwalzoberfläche 2g des ersten Glattwalzwerkzeugs 1g als Strukturelemente 4g ausschließlich Erhebungen 9g umfasst. Bei dem in Fig. 4 dargestellten ersten Glattwalzwerkzeug 1g handelt es sich um eine Variante des ersten Glattwalzwerkzeugs 1 aus den Fig. 1A bis 1C, wobei die Merkmale des Glattwalzwerkzeugs 1 aus den Fig. 1A bis 1C grundsätzlich auf das erste Glattwalzwerkzeuge 1g der Fig. 4 übertragbar sind. Das in Fig. 4 dargestellte erste Glattwalzwerkzeug 1g unterscheidet sich von dem in Fig. 3 dargestellten ersten Glattwalzwerkzeug 1f lediglich darin, dass die Strukturelemente 4g ausschließlich als Erhebungen 9g ausgestaltet sind. Das erste Glattwalzwerkzeug 1g sowie das Werkstück 7g sind jeweils drehbar gelagert. Beim Glattwalzen rollen das erste Glattwalzwerkzeug 1g und das Werkstück 7g aneinander ab, wobei die erste Glattwalzoberfläche 2g die Werkstückoberfläche 10g kontaktiert. Beim Glattwalzen werden mittels der Strukturelemente 4g des ersten Glattwalzwerkzeugs 1g im Wesentlichen Vertiefungen 11g in der Werkstückoberfläche 10g gebildet. Durch die beim Glattwalzen entstehenden Vertiefungen 11g kann die Haftung einer aufzubringenden Beschichtung mittels mechanischer Adhäsion verbessert werden. Ein entsprechend glattgewalztes Werkstück 7g eignet sich zudem besonders für das Aufnehmen von Schmiermitteln und Schmutzpartikeln. Vorteilhafterweise wird das Werkstück 7g, insbesondere die Werkstückoberfläche 10g, durch das Glattwalzen zudem kaltverfestigt.

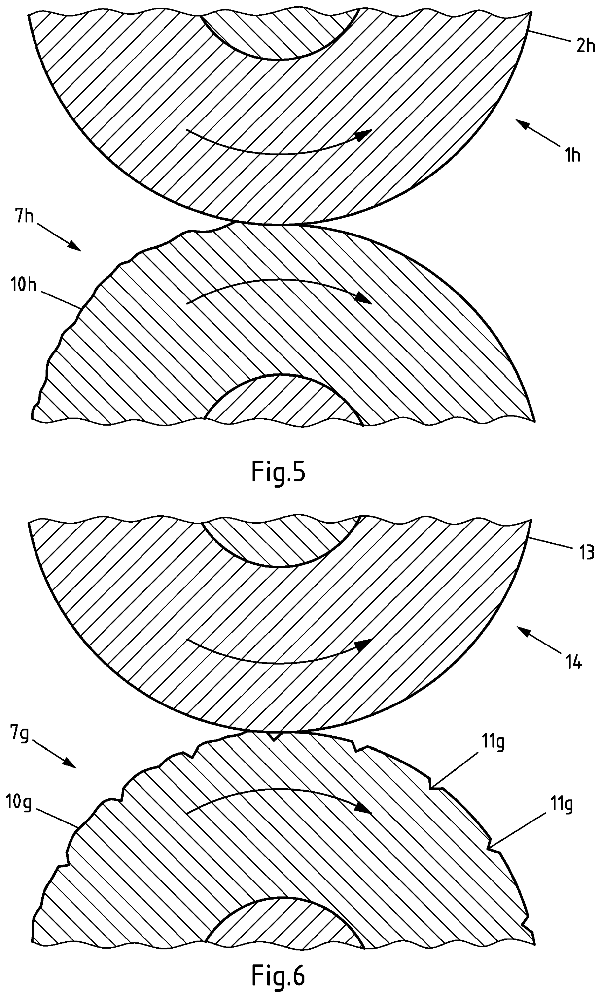

Die Fig. 5 zeigt den Schritt c) des Verfahrens in einer geschnittenen Seitenansicht, wobei die erste Glattwalzoberfläche 2h des ersten Glattwalzwerkzeugs 1h glatt ausgestaltet ist. Bei dem in Fig. 5 dargestellten ersten Glattwalzwerkzeug 1h handelt es sich um eine Variante des ersten Glattwalzwerkzeugs 1 aus den Fig. 1A bis 1C, wobei die Merkmale des Glattwalzwerkzeugs 1 aus den Fig. 1A bis 1C grundsätzlich auf das erste Glattwalzwerkzeuge 1h der Fig. 5 übertragbar sind. Das in Fig. 5 dargestellte erste Glattwalzwerkzeug 1h entspricht zudem vorteilhafterweise dem in Fig. 2A dargestellten ersten Glattwalzwerkzeug 1a. Das erste Glattwalzwerkzeug 1h sowie das Werkstück 7h sind jeweils drehbar gelagert. Beim Glattwalzen rollen das erste Glattwalzwerkzeug 1h und das Werkstück 7h aneinander ab, wobei die erste Glattwalzoberfläche 2h die Werkstückoberfläche 10h kontaktiert. Durch das Glattwalzen des Werkstücks 7h mittels des ersten Glattwalzwerkzeugs 7h mit glatter Glattwalzoberfläche 10h wird die Werkstückoberfläche 10h des Werkstücks 7h geglättet und eine glatte Werkstückoberfläche 10h erzeugt. Die glatte Werkstückoberfläche 10h eignet sich dabei besonders für ein Beschichten. Eine glatte Werkstückoberfläche 10h verbessert bei einer auf das Werkstück 7h aufzubringenden Beschichtung die Haftung mittels spezifischer Adhäsion. Vorteilhafterweise wird das Werkstück 7h, insbesondere die Werkstückoberfläche 10h, durch das Glattwalzen zudem kaltverfestigt.

Die Fig. 6 zeigt den Schritt c1) des Verfahrens in einer geschnittenen Seitenansicht, wobei die zweite Glattwalzoberfläche 13 des zweiten Glattwalzwerkzeugs 14 glatt ausgestaltet ist. Bei dem in Fig. 6 dargestellten Schritt c1) wird das Werkstück 7g aus Fig. 4, welches bereits mit dem ersten Glattwalzwerkzeug 1g glattgewalzt wurde, erneut glattgewalzt. Das Werkstück 7g umfasst daher eine Vielzahl von Vertiefungen 11g auf der Werkstückoberfläche 10g. Das zweite Glattwalzwerkzeug 14 sowie das Werkstück 7g sind jeweils drehbar gelagert. Beim Glattwalzen rollen das zweite Glattwalzwerkzeug 14 und das Werkstück 7g aneinander ab, wobei die zweite Glattwalzoberfläche 13 die Werkstückoberfläche 10g kontaktiert. Beim Glattwalzen mittels des zweiten Glattwalzwerkzeug 14 wird die Werkstückoberfläche 10g geglättet, jedoch bleiben die im vorangegangen Schritt c) gebildeten Vertiefungen 11g auf der Werkstückoberfläche 10g wenigstens teilweise erhalten. Die Bereiche der Werkstückoberfläche 10g zwischen den Vertiefungen 11g auf der Werkstückoberfläche 10g sind nach dem Glattwalzen mittels des zweiten Glattwalzwerkzeugs 14 vorteilhafterweise jedoch glatt. Eine entsprechend bearbeitete Werkstückoberfläche 10g eignet sich dabei besonders für ein Beschichten. Durch die verbleibenden Vertiefungen 11g in der Werkstückoberfläche 10g wird die Haftung einer aufzubringenden Beschichtung mittels mechanischer Adhäsion verbessert. Die glatten Bereiche der Werkstückoberfläche 10g zwischen den verbleibenden Vertiefungen 11g auf der Werkstückoberfläche 10g verbessern wiederum die Haftung einer aufzubringenden Beschichtung mittels spezifischer Adhäsion verbessert. Ebenso verringert eine entsprechend bearbeitete Werkstückoberfläche 10g die Reibung des Werkstücks 7g und erhöht somit dessen Lebensdauer. Die glatten Bereiche der Werkstückoberfläche 10g verringern den Reibungskoeffizienten des Werkstücks 7g, während die Vertiefungen 11g auf der Werkstückoberfläche 10g die Aufnahme von Schmiermitteln und Schmutzpartikel ermöglichen. Vorteilhafterweise wird das Werkstück 7g, insbesondere die Werkstückoberfläche 10g, durch das Glattwalzen mittels des zweiten Glattwalzwerkzeugs 14 weiter kaltverfestigt.

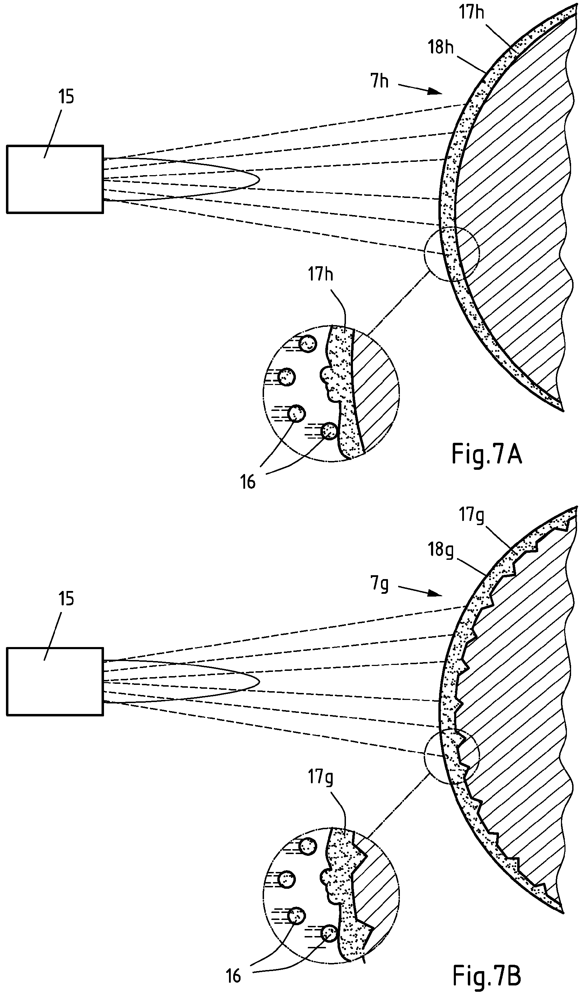

Die Fig. 7A zeigt den Schritt d) des Verfahrens in einer geschnittenen Seitenansicht, wobei der Schritt c) zuvor mit einem ersten Glattwalzwerkzeug 1h mit einer glatten ersten Glattwalzoberfläche 2h erfolgt ist. Das in Fig. 7A dargestellte Werkstück 7h wurde dabei vor dem Beschichten mittels dem in Fig. 5 dargestellten ersten Glattwalzwerkzeug 1h glattgewalzt. Das in Fig. 7A dargestellte Beschichten des Werkstücks 7h erfolgt dabei durch thermisches Spritzen. Beim thermischen Spritzen wird das für das Beschichten verwendete Material mittels einer Spritzpistole 15, auch Spritzbrenner genannt, bis zum plastischen Zustand erhitzt, beschleunigt und als Spritzpartikel 16 auf das zu beschichtende Werkstück 7h geschleudert. Beim Auftreffen des jeweiligen Spritzpartikels 16 auf dem Werkstück 7h wird der Spritzpartikel 16 flachgedrückt und erstarrt durch Wärmeabgabe. Die Spritzpartikel 16 bilden dabei eine Beschichtung 17h, welche wenigstens abschnittsweise die neue Werkstückoberfläche 18h des nun beschichteten Werkstücks 7h bildet. Aufgrund des zuvor durchgeführten Glattwalzens mittels glatter Glattwalzoberfläche 2h des ersten Glattwalzwerkzeugs 1h liegt eine verbesserte Haftung der Beschichtung 17h durch spezifische Adhäsion vor.

Die Fig. 7B zeigt den Schritt d) des Verfahrens in einer geschnittenen Seitenansicht, wobei der Schritt c) zuvor mit einem ersten Glattwalzwerkzeug 1g mit einer ersten Glattwalzoberfläche 2g umfassend Strukturelemente 4g erfolgt ist. Das in Fig. 7B dargestellte Werkstück 7g wurde dabei vor dem Beschichten mittels dem in Fig. 4 dargestellten ersten Glattwalzwerkzeug 1g glattgewalzt, also strukturiert, und zudem mittels dem in Fig. 6 dargestellten zweiten Glattwalzwerkzeugs 14 mit glatter zweiter Glattwalzoberfläche 13 ein zweites Mal glattgewalzt. Es kann jedoch auch vorgesehen sein, dass lediglich das Glattwalzen mit dem ersten Glattwalzwerkzeug 1g vor dem Beschichten erfolgt. Das in Fig. 7B dargestellte Beschichten erfolgt wie in Fig. 7A durch thermisches Spritzen, wobei Spritzpartikel 16 mittels einer Spritzpistole 15 auf das Werkstück 7g geschleudert werden. Die Spritzpartikel 16 bilden dabei ebenfalls eine Beschichtung 17g, welche wenigstens abschnittsweise die neue Werkstückoberfläche 18g des nun beschichteten Werkstücks 7g bildet. Aufgrund des zuvor durchgeführten Glattwalzens sowohl mittels erstem Glattwalzwerkzeugs 1g mit einer ersten Glattwalzoberfläche 2g umfassend Strukturelemente 4g als auch mittels des zweiten Glattwalzwerkzeugs 14 mit glatter Glattwalzoberfläche 13 liegt eine verbesserte Haftung der Beschichtung 17h durch mechanische Adhäsion als auch spezifische Adhäsion vor.

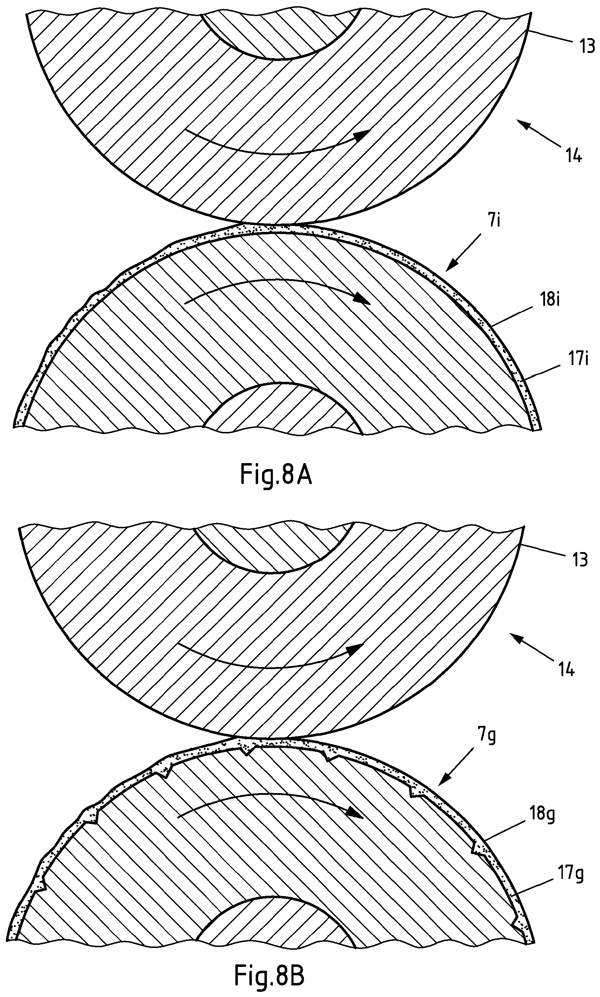

Die Fig. 8A zeigt in einer geschnittenen Seitenansicht den Schritt c1), wobei zuvor der Schritt c) mit einem ersten Glattwalzwerkzeug 1h mit einer glatten ersten Glattwalzoberfläche 2h und der Schritt d) erfolgt ist. Das Glattwalzen des Werkstücks 7i ist dabei durch das in Fig. 5 dargestellte erste Glattwalzwerkzeug 1h erfolgt, jedoch ist bei dem in Fig. 8A dargestellten Werkstück 7i kein anschließender Glattwalzschritt mit einem zweiten Glattwalzwerkzeug 14 erfolgt. Es kann jedoch auch vorgesehen sein, dass zusätzlich vor dem Beschichten ein Glattwalzen mittels eines zweiten Glattwalzwerkzeugs 14 erfolgt. In diesem Fall würde der Schritt c1) zweimal erfolgen, nämlich einmal vor der dem Schritt d) und einmal nach dem Schritt d). Nach dem Beschichten im Schritt d) erfolgt wie in Fig. 8A dargestellt ein Glattwalzen mit einem zweiten Glattwalzwerkzeug 14 gemäß dem Schritt c1). Das zweite Glattwalzwerkzeug 14 sowie das Werkstück 7i sind jeweils drehbar gelagert. Beim Glattwalzen rollen das zweite Glattwalzwerkzeug 14 und das Werkstück 7i aneinander ab, wobei die zweite Glattwalzoberfläche 13 die Werkstückoberfläche 18i kontaktiert. Das Werkstück 7i, insbesondere die Werkstückoberfläche 18i, wird dabei geglättet und kaltverfestigt. Die Werkstückoberfläche 18i wird bei dem in Fig. 8A dargestellten Werkstück 7i durch die im Schritt d) aufgebrachte Beschichtung 17i gebildet.

Die Fig. 8B zeigt schließlich in einer geschnittenen Seitenansicht den Schritt c1), wobei zuvor der Schritt c) mit einem ersten Glattwalzwerkzeug 1g mit einer ersten Glattwalzoberfläche 2g umfassend Strukturelemente 4g und der Schritt d) erfolgt ist. Das Glattwalzen des Werkstücks 7g im Schritt c) ist dabei durch das in Fig. 4 dargestellte erste Glattwalzwerkzeug 1g erfolgt, wobei anschließend - wie in Fig. 6 dargestellt - ein zweiter Glattwalzschritt gemäß des Schritts c1) mit einem zweiten Glattwalzwerkzeug 14 erfolgte. Hierauf war wiederum gemäß des Schritts d) ein Beschichten des Werkstücks 7g erfolgt, wie in Fig. 7A dargestellt. Es handelt sich somit bei dem Werkstück 7g in Fig. 8B um dasselbe Werkstück 7g wie in Fig. 4 und Fig. 6. In Fig. 8A dargestellt ist ein weiterer Glattwalzschritt mit dem zweiten Glattwalzwerkzeug 14, gemäß des Schritts c1). Der Schritt c1) erfolgt somit zweimal, einmal vor und einmal nach dem Beschichten des Werkstücks 7g gemäß dem Schritt d). Das in Fig. 8B dargestellte zweite Glattwalzwerkzeug 14 sowie das Werkstück 7g sind jeweils drehbar gelagert. Beim Glattwalzen rollen das zweite Glattwalzwerkzeug 14 und das Werkstück 7g aneinander ab, wobei die zweite Glattwalzoberfläche 13 die Werkstückoberfläche 18g kontaktiert. Das Werkstück 7g, insbesondere die Werkstückoberfläche 18g, wird dabei geglättet und kaltverfestigt. Die Werkstückoberfläche 18g wird bei dem in Fig. 8B dargestellten Werkstück 7g durch die im Schritt d) aufgebrachte Beschichtung 17g gebildet.

### Bezugszeichenliste:

- 1, 1a, 1b, 1c, 1d, 1e, 1f, 1g, 1h:: erstes Glattwalzwerkzeug
- 2, 2a, 2b, 2c, 2d, 2e, 2f, 2g, 2h:: erste Glattwalzoberfläche
- 3, 3a, 3b, 3c, 3d, 3e:: Seitenfläche
- 4, 4b, 4c, 4d, 4e, 4f, 4g:: Strukturelement
- 5:: Wälzlager
- 6:: Werkzeugaufnahme
- 7f, 7g, 7h, 7i:: Werkstück
- 8f, 8g:: Vertiefung (Strukturelement)
- 9f, 9g:: Erhebung (Strukturelement)
- 10f, 10g, 10h:: Werkstückoberfläche (unbeschichtetes Werkstück)
- 11f, 11g:: Vertiefungen (Werkstück)
- 12f:: Erhebungen (Werkstück)
- 13:: zweite Glattwalzoberfläche
- 14:: zweites Glattwalzwerkzeug
- 15:: Spritzpistole
- 16:: Spritzpartikel
- 17h, 17g, 17i :: Beschichtung
- 18h, 18g, 18i:: Werkstückoberfläche (beschichtetes Werkstück)

- M:: Mittelachse

## Patentansprüche

1. Verfahren zum Glattwalzen von Werkstückoberflächen (10f, 10g, 10h, 18h, 18g, 18i), umfassend die folgenden Schritte:
a) Bereitstellen eines Werkstücks (7f, 7g, 7h, 7i),
b) Bereitstellen eines ersten Glattwalzwerkzeugs (1, 1a, 1b, 1c, 1d, 1e, 1f, 1g, 1h),
- wobei das erste Glattwalzwerkzeug (1, 1a, 1b, 1c, 1d, 1e, 1f, 1g, 1h) eine erste Glattwalzoberfläche (2, 2a, 2b, 2c, 2d, 2e, 2f, 2g, 2h) zum Glattwalzen von Werkstücken (7f, 7g, 7h, 7i) umfasst,
- wobei das erste Glattwalzwerkzeug (1, 1a, 1b, 1c, 1d, 1e, 1f, 1g, 1h) eine Seitenfläche (3, 3a, 3b, 3c, 3d, 3e) umfasst,
- wobei die Seitenfläche (3, 3a, 3b, 3c, 3d, 3e) angrenzend an die erste Glattwalzoberfläche (2, 2a, 2b, 2c, 2d, 2e, 2f, 2g, 2h) angeordnet ist, und
- wobei die Seitenfläche (3, 3b, 3c, 3d, 3e) ein Strukturelement (4, 4b, 4c, 4d, 4e, 4f, 4g), vorzugsweise ein mittels Laserstrukturieren erzeugtes Strukturelement (4, 4b, 4c, 4d, 4e, 4f, 4g), umfasst, und
c) Glattwalzen des Werkstücks (7f, 7g, 7h, 7i) mittels des ersten Glattwalzwerkzeugs (1, 1a, 1b, 1c, 1d, 1e, 1f, 1g, 1h),
- wobei beim Glattwalzen des Werkstücks (7f, 7g, 7h, 7i) mittels des ersten Glattwalzwerkezugs (1, 1a, 1b, 1c, 1d, 1e, 1f, 1g, 1h) die erste Glattwalzoberfläche (2, 2a, 2b, 2c, 2d, 2e, 2f, 2g, 2h) die Werkstückoberfläche (10f, 10g, 10h, 18h, 18g, 18i) des Werkstücks (7f, 7g, 7h, 7i) kontaktiert und glattwalzt.

2. Verfahren nach dem Anspruch 1,
**gekennzeichnet durch**
den folgenden Schritt:
d) Beschichten der Werkstückoberfläche (10f, 10g, 10h) des Werkstücks (7f, 7g, 7h, 7i).

3. Verfahren nach dem Anspruch 2,
**dadurch gekennzeichnet, dass**
in Schritt d) das Beschichten der Werkstückoberfläche (10f, 10g, 10h) des Werkstücks (7f, 7g, 7h, 7i) durch thermisches Spritzen erfolgt.

4. Verfahren nach Anspruch 2 oder Anspruch 3,
**dadurch gekennzeichnet, dass**
der Schritt c) wenigstens zeitweise vor dem Schritt d) erfolgt und/oder der Schritt c) wenigstens zeitweise nach dem Schritt d) erfolgt.

5. Verfahren nach einem der Ansprüche 1 bis 4,
**dadurch gekennzeichnet, dass**
das erste Glattwalzwerkzeug (1, 1a, 1b, 1c, 1d, 1e, 1f, 1g, 1h) eine Mittelachse (M) umfasst und dass, vorzugsweise, sich die erste Glattwalzoberfläche (2, 2a, 2b, 2c, 2d, 2e, 2f, 2g, 2h) wenigstens abschnittsweise um die Mittelachse (M) herum in Umfangsrichtung erstreckt.

6. Verfahren nach Anspruch 1,
**dadurch gekennzeichnet, dass**
die Seitenfläche (3, 3a, 3b, 3c, 3d, 3e) sich wenigstens abschnittsweise im Wesentlichen senkrecht zu der Mittelachse (M) des ersten Glattwalzwerkzeugs (1, 1a, 1b, 1c, 1d, 1e, 1f, 1g, 1h) erstreckt.

7. Verfahren nach einem der Ansprüche 1 bis 6,
**dadurch gekennzeichnet, dass**
die erste Glattwalzoberfläche (2, 2b, 2c, 2d, 2e, 2f, 2g) ein Strukturelement (4, 4b, 4c, 4d, 4e, 4f, 4g), vorzugsweise ein mittels Laserstrukturieren erzeugtes Strukturelement (4, 4b, 4c, 4d, 4e, 4f, 4g), umfasst.

8. Verfahren nach Anspruch 1 oder Anspruch 7,
**dadurch gekennzeichnet, dass**
das Strukturelement (4, 4b, 4c, 4d, 4e, 4f, 4g) des ersten Glattwalzwerkzeugs (1, 1b, 1c, 1d, 1e, 1f, 1g), insbesondere der ersten Glattwalzoberfläche (2, 2b, 2c, 2d, 2e, 2f, 2g) und/oder der Seitenfläche (3, 3b, 3c, 3d, 3e), wenigstens abschnittsweise punktförmig, kreisförmig, linienförmig und/oder sphärisch ausgestaltet ist.

9. Verfahren nach dem Anspruch 1, Anspruch 7 oder Anspruch 8,
**dadurch gekennzeichnet, dass**
sich das Strukturelement (4, 4b, 4c, 4e, 4f, 4g), insbesondere auf der ersten Glattwalzoberfläche (2, 2b, 2c, 2e, 2f, 2g), wenigstens abschnittsweise im Wesentlichen parallel zu der Mittelachse (M) des ersten Glattwalzwerkzeugs (1, 1b, 1c, 1e, 1f, 1g) erstreckt.

10. Verfahren nach Anspruch 1 oder einem der Ansprüche 7 bis 9,
**dadurch gekennzeichnet, dass**
sich das Strukturelement (4, 4b, 4c, 4d, 4e, 4f, 4g), insbesondere auf der Seitenfläche (3, 3b, 3c, 3d, 3e), wenigstens abschnittsweise im Wesentlichen senkrecht zu der Mittelachse (M) des ersten Glattwalzwerkzeugs (1, 1b, 1c, 1d, 1e, 1f, 1g) erstreckt.

11. Verfahren nach Anspruch 1 oder einem der Ansprüche 7 bis 10,
**dadurch gekennzeichnet, dass**
in Schritt c) mittels des Strukturelements (4f, 4g) des ersten Glattwalzwerkzeugs (1f, 1g), insbesondere des Strukturelements (4f, 4g) der ersten Glattwalzoberfläche (2f, 2g), in der Werkstückoberfläche (10f, 10g) des Werkstücks (7f, 7g) eine Vertiefung (11f, 11g) gebildet wird und/oder mittels des Strukturelements (4, 4b, 4c, 4d, 4e, 4f) des ersten Glattwalzwerkzeugs (1, 1b, 1c, 1d, 1e, 1f), insbesondere des Strukturelements (4, 4b, 4c, 4d, 4e, 4f) der ersten Glattwalzoberfläche (2, 2b, 2c, 2d, 2e, 2f), in der Werkstückoberfläche (10f) des Werkstücks (7f) eine Erhebung (12f) gebildet wird.

12. Verfahren nach einem der Ansprüche 1 bis 11,
**gekennzeichnet durch**
die folgenden Schritte:
b1) Bereitstellen eines zweiten Glattwalzwerkzeugs (14),
- wobei das zweite Glattwalzwerkzeug (14) eine zweite Glattwalzoberfläche (13) zum Glattwalzen von Werkstücken (7g, 7i) umfasst, und
c1) Glattwalzen des Werkstücks (7g, 7i) mittels des zweiten Glattwalzwerkzeugs (14),
- wobei beim Glattwalzen des Werkstücks (7g, 7i) mittels des zweiten Glattwalzwerkezugs (14) die zweite Glattwalzoberfläche (13) die Werkstückoberfläche (10g, 18g, 18i) des Werkstücks (7g, 7i) kontaktiert und glattwalzt.

13. Verfahren nach dem Anspruch 12,
**dadurch gekennzeichnet, dass**
die zweite Glattwalzoberfläche (13) des in Schritt b1) bereitgestellten zweiten Glattwalzwerkzeugs (14) wenigstens abschnittsweise im Wesentlichen glatt ausgestaltet ist.

14. Verfahren nach Anspruch 12 oder Anspruch 13,
**dadurch gekennzeichnet, dass**
der Schritt c1) wenigstens zeitweise nach dem Schritt c) erfolgt und, vorzugsweise, dass der Schritt c1) wenigstens zeitweise vor dem Schritt d) erfolgt.

15. Verfahren nach Anspruch 14,
**dadurch gekennzeichnet, dass**
- das die Werkstückoberfläche (10g) des in Schritt a) bereitgestellten Werkstücks (7g) einen Rvk-Wert und einen Rpk-Wert aufweist,
- dass das Verhältnis von Rvk-Wert zu Rpk-Wert nach dem Schritt c1) höher ist als das Verhältnis von Rvk-Wert zu Rpk-Wert vor dem Schritt c), und
- dass, vorzugsweise, das Verhältnis von Rvk-Wert zu Rpk-Wert im Schritt c) durch das Glattwalzen des Werkstücks (7g) mittels des ersten Glattwalzwerkzeugs (1g), insbesondere mittels des Strukturelements (4g) des ersten Glattwalzwerkzeugs (1g), erhöht wird.

## Claims

1. Method for roller burnishing workpiece surfaces (10f, 10g, 10h, 18h, 18g, 18i), comprising the following steps:
a) providing a workpiece (7f, 7g, 7h, 7i),
b) providing a first roller burnishing tool (1, 1a, 1b, 1c, 1d, 1e, 1f, 1g, 1h),
- wherein the first roller burnishing tool (1, 1a, 1b, 1c, 1d, 1e, 1f, 1g, 1h) comprises a first roller burnishing surface (2, 2a, 2b, 2c, 2d, 2e, 2f, 2g, 2h) for roller burnishing workpieces (7f, 7g, 7h, 7i),
- wherein the first roller burnishing tool (1, 1a, 1b, 1c, 1d, 1e, 1f, 1g, 1h) comprises a side surface (3, 3a, 3b, 3c, 3d, 3e),
- wherein the side surface (3, 3a, 3b, 3c, 3d, 3e) is arranged adjacent to the first roller burnishing surface (2, 2a, 2b, 2c, 2d, 2e, 2f, 2g, 2h), and
- wherein the side surface (3, 3b, 3c, 3d, 3e) comprises a structuring element (4, 4b, 4c, 4d, 4e, 4f, 4g), preferably a structuring element (4, 4b, 4c, 4d, 4e, 4f, 4g) produced by laser structuring, and
c) roller burnishing the workpiece (7f, 7g, 7h, 7i) by means of the first roller burnishing tool (1, 1a, 1b, 1c, 1d, 1e, 1f, 1g, 1h),
- wherein during the roller burnishing of the workpiece (7f, 7g, 7h, 7i) by means of the first roller burnishing tool (1, 1a, 1b, 1c, 1d, 1e, 1f, 1g, 1h) the first roller burnishing surface (2, 2a, 2b, 2c, 2d, 2e, 2f, 2g, 2h) contacts and roller burnishes the workpiece surface (10f, 10g, 10h, 18h, 18g, 18i) of the workpiece (7f, 7g, 7h, 7i).

2. Method according to claim 1,
**characterized by**
the following step:
d) coating the workpiece surface (10f, 10g, 10h) of the workpiece (7f, 7g, 7h, 7i).

3. Method according to claim 2,
**characterized in that**
in step d) the coating of the workpiece surface (10f, 10g, 10h) of the workpiece (7f, 7g, 7h, 7i) is carried out by thermal spraying.

4. Method according to claim 2 or claim 3,
**characterized in that**
step c) is carried out at least at times before step d) and/or step c) is carried out at least at times after step d).

5. Method according to any one of claims 1 to 4,
**characterized in that**
the first roller burnishing tool (1, 1a, 1b, 1c, 1d, 1e, 1f, 1g, 1h) comprises a central axis (M) and that, preferably, the first roller burnishing surface (2, 2a, 2b, 2c, 2d, 2e, 2f, 2g, 2h) extends, at least in sections, around the central axis (M) in the circumferential direction.

6. Method according to claim 1,
**characterized in that**
the side surface (3, 3a, 3b, 3c, 3d, 3e) extends, at least in sections, substantially perpendicular to the central axis (M) of the first roller burnishing tool (1, 1a, 1b, 1c, 1d, 1e, 1f, 1g, 1h).

7. Method according to any one of claims 1 to 6,
**characterized in that**
the first roller burnishing surface (2, 2b, 2c, 2d, 2e, 2f, 2g) comprises a structuring element (4, 4b, 4c, 4d, 4e, 4f, 4g), preferably a structuring element (4, 4b, 4c, 4d, 4e, 4f, 4g) produced by laser structuring.

8. Method according to claim 1 or claim 7,
**characterized in that**
the structuring element (4, 4b, 4c, 4d, 4e, 4f, 4g) of the first roller burnishing tool (1, 1b, 1c, 1d, 1e, 1f, 1g), in particular of the first roller burnishing surface (2, 2b, 2c, 2d, 2e, 2f, 2g) and/or of the side surface (3, 3b, 3c, 3d, 3e), is configured, at least in sections, in a point-shaped, circular-shaped, line-shaped and/or spherical manner.

9. Method according to claim 1, claim 7 or claim 8,
**characterized in that**
the structuring element (4, 4b, 4c, 4e, 4f, 4g), in particular on the first roller burnishing surface (2, 2b, 2c, 2e, 2f, 2g), extends, at least in sections, substantially parallel to the central axis (M) of the first roller burnishing tool (1, 1b, 1c, 1e, 1f, 1g).

10. Method according to claim 1 or any one of claims 7 to 9,
**characterized in that**
the structuring element (4, 4b, 4c, 4d, 4e, 4f, 4g), in particular on the side surface (3, 3b, 3c, 3d, 3e), extends, at least in sections, substantially perpendicular to the central axis (M) of the first roller burnishing tool (1, 1b, 1c, 1d, 1e, 1f, 1g).

11. Method according to claim 1 or any one of claims 7 to 10,
**characterized in that**
in step c), by means of the structuring element (4f, 4g) of the first roller burnishing tool (1f, 1g), in particular of the structuring element (4f, 4g) of the first roller burnishing surface (2f, 2g), a depression (11f, 11g) is formed in the workpiece surface (10f, 10g) of the workpiece (7f, 7g) and/or, by means of the structuring element (4, 4b, 4c, 4d, 4e, 4f) of the first roller burnishing tool (1, 1b, 1c, 1d, 1e, 1f), in particular of the structuring element (4, 4b, 4c, 4d, 4e, 4f) of the first roller burnishing surface (2, 2b, 2c, 2d, 2e, 2f), a protrusion (12f) is formed in the workpiece surface (10f) of the workpiece (7f).

12. Method according to any one of claims 1 to 11,
**characterized by**
the following steps:
b1) providing a second roller burnishing tool (14),
- wherein the second roller burnishing tool (14) comprises a second roller burnishing surface (13) for roller burnishing workpieces (7g, 7i), and
c1) roller burnishing the workpiece (7g, 7i) by means of the second roller burnishing tool (14),
- wherein during the roller burnishing of the workpiece (7g, 7i) by means of the second roller burnishing tool (14) the second roller burnishing surface (13) contacts and roller burnishes the workpiece surface (10g, 18g, 18i) of the workpiece (7g, 7i).

13. Method according to claim 12,
**characterized in that**
the second roller burnishing surface (13) of the second roller burnishing tool (14) provided in step b1) is configured to be, at least in sections, substantially smooth.

14. Method according to claim 12 or claim 13,
**characterized in that**
step c1) is carried out at least at times after step c) and, preferably, step c1) is carried out at least at times before step d).

15. Method according to claim 14,
**characterized in that**
- the workpiece surface (10g) of the workpiece (7g) provided in step a) has an Rvk value and an Rpk value,
- that the ratio of the Rvk value to the Rpk value after step c1) is higher than the ratio of the Rvk value to the Rpk value before step c), and
- that, preferably, the ratio of the Rvk value to the Rpk value is increased in step c) by roller burnishing the workpiece (7g) by means of the first roller burnishing tool (1g), in particular by means of the structuring element (4g) of the first roller burnishing tool (1g).

## Revendications

1. Procédé de galetage de surfaces de pièces à usiner (10f, 10g, 10h, 18h, 18g, 18i), comprenant les étapes suivantes :
a) la fourniture d'une pièce à usiner (7f, 7g, 7h, 7i),
b) la fourniture d'un premier outil de galetage (1, 1a, 1b, 1c, 1d, 1e, 1f, 1g, 1h),
- ledit premier outil de galetage (1, 1a, 1b, 1c, 1d, 1e, 1f, 1g, 1h) comprenant une première surface de galetage (2, 2a, 2b, 2c, 2d, 2e, 2f, 2g, 2h) pour lisser par galetage des pièces à usiner (7f, 7g, 7h, 7i),
- ledit premier outil de galetage (1, 1a, 1b, 1c, 1d, 1e, 1f, 1g, 1h) comprenant une surface latérale (3, 3a, 3b, 3c, 3d, 3e),
- ladite surface latérale (3, 3a, 3b, 3c, 3d, 3e) étant agencée adjacente à la première surface de galetage (2, 2a, 2b, 2c, 2d, 2e, 2f, 2g, 2h), et
- ladite surface latérale (3, 3b, 3c, 3d, 3e) comportant un élément structurel (4, 4b, 4c, 4d, 4e, 4f, 4g), de préférence un élément structurel (4, 4b, 4c, 4d, 4e, 4f, 4g) obtenu par structuration au laser, et
c) le galetage de la pièce à usiner (7f, 7g, 7h, 7i) à l'aide du premier outil de galetage (1, 1a, 1b, 1c, 1d, 1e, 1f, 1g, 1h),
- la première surface de galetage (2, 2a, 2b, 2c, 2d, 2e, 2f, 2g, 2h) entrant en contact et lissant par galetage la surface de la pièce à usiner (10f, 10g, 10h, 18h, 18g, 18i) de la pièce à usiner (7f, 7g, 7h, 7i) pendant le processus de galetage de la pièce à usiner (7f, 7g, 7h, 7i) à l'aide du premier outil de galetage (1, 1a, 1b, 1c, 1d, 1e, 1f, 1g, 1h).

2. Procédé selon la revendication 1,
**caractérisé par** l'étape suivante :
d) Revêtement de la surface de la pièce à usiner (10f, 10g, 10h) de la pièce à usiner (7f, 7g, 7h, 7i).

3. Procédé selon la revendication 2,
**caractérisé en ce que**
à l'étape d), le revêtement de la surface de la pièce à usiner (10f, 10g, 10h) de la pièce à usiner (7f, 7g, 7h, 7i) est effectué par pulvérisation thermique.

4. Procédé selon la revendication 2 ou la revendication 3,
**caractérisé en ce que**
l'étape c) est effectuée, au moins par moments, avant l'étape d) et/ou l'étape c) est effectuée, au moins par moments, après l'étape d).

5. Procédé selon l'une des revendications 1 à 4,
**caractérisé en ce que**
le premier outil de galetage (1, 1a, 1b, 1c, 1d, 1e, 1f, 1g, 1h) comprend un axe central (M) et **en ce que**, de préférence, la première surface de galetage (2, 2a, 2b, 2c, 2d, 2e, 2f, 2g, 2h) s'étend, au moins par sections, autour de l'axe central (M) dans la direction périphérique.

6. Procédé selon la revendication 1,
**caractérisé en ce que**
la surface latérale (3, 3a, 3b, 3c, 3d, 3e) s'étend, au moins par sections, sensiblement perpendiculairement par rapport à l'axe central (M) du premier outil de galetage (1, 1a, 1b, 1c, 1d, 1e, 1f, 1g, 1h).

7. Procédé selon l'une quelconque des revendications 1 à 6,
**caractérisé en ce que**
la première surface de galetage (2, 2b, 2c, 2d, 2e, 2f, 2g) comprend un élément structurel (4, 4b, 4c, 4d, 4e, 4f, 4g), de préférence un élément structurel (4, 4b, 4c, 4d, 4e, 4f, 4g) obtenu par structuration au laser.

8. Procédé selon la revendication 1 ou la revendication 7,
**caractérisé en ce que**
l'élément structurel (4, 4b, 4c, 4d, 4e, 4f, 4g) du premier outil de galetage (1, 1b, 1c, 1d, 1e, 1f, 1g), notamment de la première surface de galetage (2, 2b, 2c, 2d, 2e, 2f, 2g) et/ou de la surface latérale (3, 3b, 3c, 3d, 3e), est conçu, au moins par sections, sous forme de points, cercles, lignes et/ou sphères.

9. Procédé selon la revendication 1, la revendication 7 ou la revendication 8,
**caractérisé en ce que**
l'élément structurel (4, 4b, 4c, 4e, 4f, 4g), notamment sur la première surface de galetage (2, 2b, 2c, 2e, 2f, 2g), s'étend, au moins par sections, sensiblement parallèlement à l'axe central (M) du premier outil de galetage (1, 1b, 1c, 1e, 1f, 1g).

10. Procédé selon la revendication 1 ou l'une quelconque des revendications 7 à 9,
**caractérisé en ce que**
l'élément structurel (4, 4b, 4c, 4d, 4e, 4f, 4g), notamment sur la surface latérale (3, 3b, 3c, 3d, 3e), s'étend, au moins par sections, sensiblement perpendiculairement par rapport à l'axe central (M) du premier outil de galetage (1, 1b, 1c, 1d, 1e, 1f, 1g).

11. Procédé selon la revendication 1 ou l'une quelconque des revendications 7 à 10,
**caractérisé en ce que**
à l'étape c) une cavité (11f, 11g) est formée dans la surface de la pièce à usiner (10f, 10g) de la pièce à usiner (7f, 7g) à l'aide de l'élément structurel (4f, 4g) du premier outil de galetage (1f, 1g), notamment de l'élément structurel (4f, 4g) de la première surface de galetage (2f, 2g), et/ou une protubérance (12f) est formée dans la surface de la pièce à usiner (10f) de la pièce à usiner (7f) à l'aide de l'élément structurel (4, 4b, 4c, 4d, 4e, 4f) du premier outil de galetage (1, 1b, 1c, 1d, 1e, 1f), notamment de l'élément structurel (4, 4b, 4c, 4d, 4e, 4f) de la première surface de galetage (2, 2b, 2c, 2d, 2e, 2f).

12. Procédé selon l'une quelconque des revendications 1 à 11,
**caractérisé par** les étapes suivantes :
b1) la fourniture d'un deuxième outil de galetage (14),
- le deuxième outil de galetage (14) comprenant une deuxième surface de galetage (13) pour le galetage des pièces à usiner (7g, 7i), et
c1) le galetage de la pièce à usiner (7g, 7i) à l'aide du deuxième outil de galetage (14),
- lors du galetage de la pièce à usiner (7g, 7i), la deuxième surface de galetage (13) entre en contact avec la surface de la pièce à usiner (10g, 18g, 18i) de la pièce à usiner (7g, 7i) à l'aide du deuxième outil de galetage(14) et la lisse par galetage.

13. Procédé selon la revendication 12,
**caractérisé en ce que**
la deuxième surface de galetage (13) du deuxième outil de galetage (14) fourni à l'étape b1) est conçue, au moins par sections, de manière sensiblement lisse.

14. Procédé selon la revendication 12 ou la revendication 13,
**caractérisé en ce que**
l'étape c1) est effectuée, au moins par moments, après l'étape c) et, de préférence, l'étape c1) est effectuée, au moins par moments, avant l'étape d).

15. Procédé selon la revendication 14,
**caractérisé en ce que**
- la surface de la pièce à usiner (10g) de la pièce à usiner (7g), mise à disposition lors de l'étape a), présente une valeur Rvk et une valeur Rpk,
- que le rapport entre la valeur Rvk et la valeur Rpk après l'étape c1) est supérieur au rapport entre la valeur Rvk et la valeur Rpk avant l'étape c), et
- de préférence, le rapport entre la valeur Rvk et la valeur Rpk est augmenté à l'étape c) par le galetage de la pièce à usiner (7g) à l'aide du premier outil de galetage (1g), notamment au moyen de l'élément structurel (4g) du premier outil de galetage (1g).
